# FASCICULE DE BREVET EUROPEEN

(11) **EP 2 495 906 B1**
(45) Date de publication et mention de la délivrance du brevet: **20.02.2019**
(21) Numéro de dépôt: 12157612.8
(22) Date de dépôt: 01.03.2012
(51) Int. Cl.: H04L 9/08, G11B 20/00, H04N 7/167

(54) **Procédé de protection d'un contenu multimedia enregistré dans un réseau domestique**
Verfahren zum Schutz eines gespeicherten Multimedia-Inhalts im Heimnetzwerk
Method for protecting stored multimedia content in a home network

(30) Priorité: 02.03.2011 FR 1151708
(43) Date de publication de la demande: 05.09.2012
(73) Titulaire: Viaccess, 92057 Paris La Défense (FR)
(72) Inventeur: Boivin, Mathieu, 95490 VAUREAL (FR); Lafranchi, Stéphane, 75012 PARIS (FR); Pochon, Nicolas, 75014 PARIS (FR)
(74) Mandataire: Colombo, Michel

(56) Documents cités:
- EP-A1- 1 662 788
- EP-A1- 1 672 831
- EP-A2- 1 383 327
- WO-A1-2004/017635
- US-A1- 2009 067 622

## Description

L'invention concerne un procédé de protection d'un contenu multimédia enregistré. L'invention a également pour objet un procédé de transmission et un procédé d'enregistrement d'un contenu multimédia pour la mise en oeuvre du procédé de protection. L'invention a aussi pour objet un enregistreur et/ou un lecteur, une tête de réseau et un support d'enregistrement d'informations.

L'embrouillage des contenus multimédias permet de soumettre le désembrouillage de ces contenus multimédias à l'acquisition, moyennant paiement, d'un titre d'accès dont la validité est vérifiée à chaque accès aux contenus multimédias .

Dans ce contexte, il est également nécessaire de protéger les contenus multimédias transmis sous forme embrouillée puis enregistrés. En effet, si on laisse la possibilité d'enregistrer le contenu multimédia sans protection en lecture, alors celui-ci peut être indéfiniment réutilisé (relu) par le détenteur des droits, et librement mis à disposition, et utilisable (lisible) par, d'autres utilisateurs n'ayant pas acquis les titres d'accès requis pour visualiser ce contenu multimédia. Or, aujourd'hui, il est très facile de diffuser un contenu multimédia enregistré à un grand nombre de personnes, notamment par l'intermédiaire de réseaux de partage. Par exemple, un réseau de partage est un réseau poste à poste plus connu sous le terme anglais de réseau « peer to peer ». Dans une autre alternative, le partage est réalisé en utilisant des serveurs hébergés.

Il a donc déjà été proposé d'enregistrer des contenus multimédias sous forme embrouillée. Ainsi, le déposant connaît un procédé de protection d'un contenu multimédia enregistré dans lequel :
- une tête de réseau transmet un contenu multimédia embrouillé et des messages ECM (Entitlement Control Message) contenant des cryptogrammes CW* de mots de contrôle CW permettant chacun de désembrouiller une cryptopériode respective du contenu multimédia embrouillé,
- un enregistreur reçoit le contenu multimédia embrouillé et les messages ECM, déchiffre les cryptogrammes CW* contenus dans les messages ECM reçus avec une clé d'abonnement Kₐ et protège en lecture le contenu multimédia embrouillé à l'aide d'une clé locale KHₖ en chiffrant, avec la clé locale KHₖ, les mots de contrôle déchiffrés pour générer des cryptogrammes CW^{KHk},
- l'enregistreur enregistre le contenu multimédia embrouillé et les cryptogrammes CW^{KHk}.

Le déposant connaît également un procédé de protection d'un contenu multimédia enregistré similaire sauf que l'enregistreur protège en lecture le contenu multimédia embrouillé à l'aide de la clé locale KHₖ en désembrouillant le contenu multimédia avec les mots de contrôle déchiffrés puis en embrouillant à nouveau le contenu multimédia avec au moins un mot de contrôle CW' et en générant un cryptogramme CW'^{KHk} correspondant au mot de contrôle CW' chiffré avec la clé locale KH_{K}.

Dans la plupart des cas, l'enregistreur est implémenté dans un terminal à l'intérieur duquel est également implémenté un lecteur permettant de lire ou jouer, en clair, le contenu multimédia enregistré.

Par « en clair », on désigne le fait que le contenu multimédia lu est directement perceptible et compréhensible par un être humain. Autrement dit, le contenu multimédia en clair est le résultat d'un désembrouillage correct du contenu multimédia embrouillé.

Dans ces procédés connus, la clé locale KHₖ est générée localement par le terminal et conservée secrète dans un processeur de sécurité. Ainsi, seul le lecteur de ce terminal peut jouer en clair le contenu multimédia enregistré protégé au moyen de cette clé. Ceci est une bonne solution pour empêcher le partage du contenu multimédia enregistré sur des réseaux de partage. Toutefois, cette solution présente également des inconvénients.

En effet, aujourd'hui, il est de plus en plus fréquent qu'un utilisateur possède au sein de son foyer plusieurs terminaux pour désembrouiller des contenus multimédias reçus. Or, avec la solution connue, le contenu multimédia enregistré par l'un de ces terminaux ne peut pas être lu par un autre terminal du même foyer même si celui-ci possède les titres d'accès requis. Autrement dit, il n'est pas possible de partager le contenu multimédia enregistré entre les différents terminaux d'un même foyer. En effet, l'autre terminal ne connait pas la clé locale KH utilisée pour protéger le contenu multimédia enregistré.

De l'état de la technique est également connu de :
- EP 1 672 831 A1,
- WO 2004/017635 A1,
- EP 1 383 327 A2,
- EP 1 662 788 A1,
- US2009/067622 A1.

L'invention vise à remédier à cet inconvénient tout en empêchant le partage sans aucune restriction du contenu multimédia enregistré par le biais de réseaux de partage.

Elle a donc pour objet un procédé de protection d'un contenu multimédia enregistré conforme à la revendication 1 ou 2.

Dans le procédé ci-dessus, la clé locale KHₖ est seulement transmise aux M lecteurs associés à l'identifiant de foyer. Ainsi, seuls ces M lecteurs sont capables de déchiffrer les cryptogrammes CW^{KHk} ou CW'^{KHk}. Autrement dit, seuls les lecteurs de ce groupe sont capables de déchiffrer le contenu multimédia enregistré par l'enregistreur lorsqu'ils ont reçu la clé locale KHₖ. Dès lors, le partage du contenu multimédia enregistré entre ces M lecteurs de ce groupe est possible.

Par contre, le partage du contenu multimédia enregistré avec un lecteur qui n'appartient pas à ce groupe est rendu impossible. En effet, un lecteur qui n'appartient pas à ce groupe ne reçoit pas la clé KHₖ de sorte qu'il ne peut pas lire en clair le contenu multimédia enregistré.

Ainsi, le partage d'un contenu multimédia enregistré au sein d'un même foyer est permis sans pour autant rendre possible un partage sans restriction de ce contenu multimédia enregistré sur des réseaux de partage tels que les réseaux peer to peer.

Enfin, transmettre les cryptogrammes KHₖ^{Ki} aux différents lecteurs uniquement lorsque ce lecteur demande la lecture d'un contenu multimédia accroît la sécurité du procédé. En effet, la clé KHₖ n'est transmise aux lecteurs qu'au moment où celle-ci devient nécessaire pour lire un contenu multimédia. Elle n'est donc pas systématiquement contenue dans chacun des lecteurs du groupe de M lecteurs du foyer. Cela limite l'exposition de la clé KHₖ aux tentatives d'utilisation frauduleuse de cette clé. De plus, le cryptogramme KHₖ^{Ki} n'est déchiffrable que par le i-ième lecteur. Ainsi, l'interception de ce cryptogramme sur le réseau local du foyer ne remet pas en cause la sécurité du procédé. En effet, la clé Kᵢ n'est connue d'aucun des autres lecteurs et même pas de l'enregistreur.

Les modes de réalisation de ce procédé de protection peuvent comporter une ou plusieurs des caractéristiques des revendications dépendantes.

Ces modes de réalisation présentent en outre les avantages suivants :
- l'utilisation de deux clés locales KHₖ et KH"ₖ ainsi que d'un indicateur de mode de protection permet de limiter la lecture du contenu multimédia enregistré aux seuls P lecteurs du groupe de M lecteurs qui propose un meilleur niveau de sécurité;
- la présence de l'indicateur du mode de protection à l'intérieur du message ECM permet de faire varier le mode de protection à appliquer en fonction du contenu multimédia reçu;
- la transmission d'une nouvelle clé locale KHₖ₊₁ en réponse à la suppression d'un lecteur du groupe de M lecteurs permet d'exclure ce lecteur du groupe à compter de la date de cette transmission ;
- la transmission d'une nouvelle clé locale KHₖ₊₁ en réponse à l'ajout d'un lecteur au groupe de M lecteurs permet d'inclure ce lecteur au groupe à compter de la date de cette transmission ;
- la mémorisation par les lecteurs des différentes clés locales KHₖ reçues associées à leur indice k respectif permet à ces lecteurs de continuer à jouer des contenus multimédias enregistrés avant la transmission d'une nouvelle clé KHₖ₊₁.

L'invention a également pour objet un procédé de transmission d'un contenu multimédia, conforme à la revendication 7, pour la mise en oeuvre du procédé de protection ci-dessus.

L'invention a également pour objet un procédé, conforme à la revendication 8, d'enregistrement de contenus multimédias transmis selon le procédé de transmission ci-dessus.

Les modes de réalisation de ce procédé d'enregistrement peuvent comporter les caractéristiques d'une ou plusieurs des revendications dépendantes.

L'invention a également pour objet un enregistreur et/ou lecteur conforme à la revendication 11.

L'invention à également pour objet une tête de réseau conforme à la revendication 12.

L'invention a également pour objet un support d'enregistrement comportant des instructions pour l'exécution de l'un quelconque des procédés ci-dessus lorsque ces instructions sont exécutées par un calculateur électronique.

L'invention sera mieux comprise à la lecture de la description qui va suivre, donnée uniquement à titre d'exemple non limitatif et faite en se référant aux dessins sur lesquels :
- la figure 1 est une illustration schématique d'un système de transmission et de réception de contenus multimédias embrouillés,
- la figure 2 est un organigramme d'un premier mode de réalisation d'un procédé de protection d'un contenu multimédia enregistré,
- la figure 3 est un organigramme d'un autre mode de réalisation d'un procédé de protection d'un contenu multimédia enregistré.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
- « Functional Model of Conditional Access System », EBU Review, Technical European Broadcasting Union, Brussels, BE, n° 266, 21 décembre 1995.

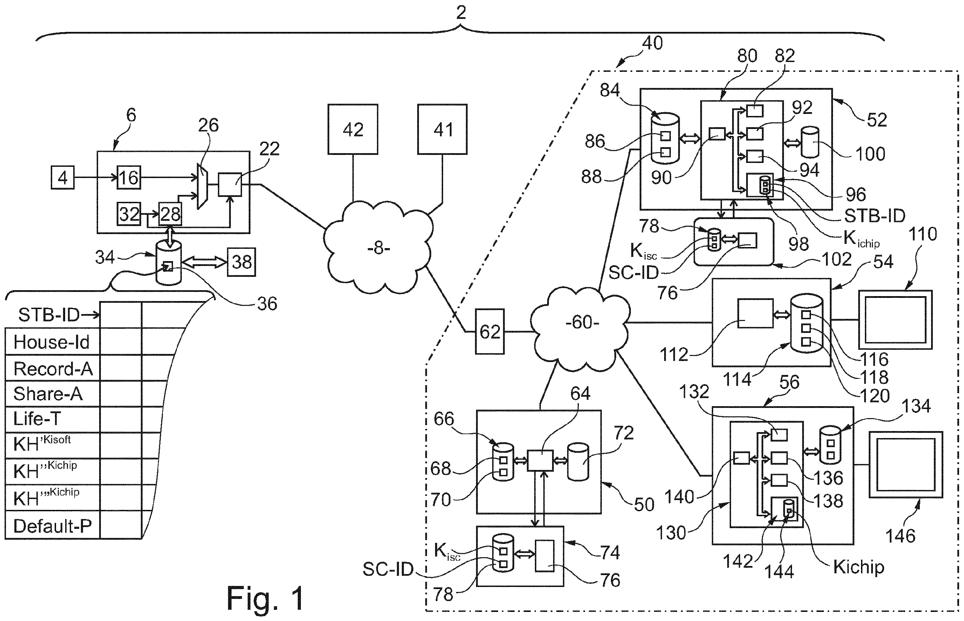

La figure 1 représente un système 2 d'émission et de réception de contenus multimédias embrouillés. Les contenus multimédias émis sont des contenus multimédias linéarisés. Par exemple, un contenu multimédia correspond à une séquence d'un programme audiovisuel tel qu'une émission de télévision ou un film.

Les contenus multimédias en clair sont générés par une ou plusieurs sources 4 et transmis à une tête de réseau 6. La tête de réseau 6 diffuse les contenus multimédias simultanément vers une multitude de terminaux de réception à travers un réseau 8 de transmission d'informations. Les contenus multimédias diffusés sont, par exemple, synchronisés temporellement les uns avec les autres pour respecter une grille préétablie de programmes.

Le réseau 8 est typiquement un réseau grande distance de transmission d'informations tel que le réseau Internet ou un réseau satellitaire ou tout autre réseau de diffusion tel que celui utilisé pour la transmission de la télévision numérique terrestre (TNT).

La tête de réseau 6 comprend un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée d'un multiplexeur 26. Des messages ECM (Entitlement Control Message), EMM (Entitlement Management Message) et les contenus multimédias compressés sont multiplexés par le multiplexeur 26. Les messages ECM et EMM sont fournis par un système 28 d'accès conditionnel. Ensuite, le flux multiplexé ainsi créé est embrouillé par un embrouilleur 22 avant d'être transmis sur le réseau 8.

L'embrouilleur 22 embrouille chaque flux multiplexé pour conditionner la visualisation des contenus multimédias à certaines conditions telles que l'achat d'un titre d'accès par les utilisateurs de terminaux de réception..

L'embrouilleur 22 embrouille chaque flux multiplexé à l'aide de mots de contrôle CWₜ qui lui sont fournis, ainsi qu'au système 28 d'accès conditionnel, par un générateur 32 de clés. Plus précisément, chaque flux multiplexé est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle CWₜ. Généralement, le mot de contrôle CWₜ varie d'une cryptopériode à l'autre. De plus, le mot de contrôle CWₜ est généralement spécifique à un contenu multimédia, ce dernier étant aléatoirement ou pseudo-aléatoirement tiré. L'indice t est un numéro d'ordre identifiant la cryptopériode embrouillée avec ce mot de contrôle CWt.

Ici, l'ensemble des composantes du contenu multimédia, c'est-à-dire notamment l'audio, la vidéo, le teletexte, sont embrouillées avec le même mot de contrôle CWₜ. Par exemple, les contenus multimédias sont embrouillés au niveau TS (« Transport Stream »).

Typiquement, cet embrouillage est conforme à une norme telle que la norme DVB-CSA (« Digital Video Broadcasting - Common Scrambling Algorithm », dont la mise en oeuvre est décrite dans la norme DVB ETR 289), ISMA Cryp (Internet Streaming Media Alliance Encryption and Authentication), SRTP (Secure Real-time Transport Protocol), AES (« Advanced Encryption Standard », dont la mise en oeuvre est décrite dans la norme ATIS-0800006), etc.

Le système 28 est plus connu sous l'acronyme CAS (Conditional Access System). Pour chaque canal, le système 28 génère des messages ECMₜ (Entitlement Control Message) contenant au moins le cryptogramme CW*ₜ du mot de contrôle CWₜ généré par le générateur 32 et utilisé par l'embrouilleur 22 pour embrouiller la cryptopériode t du canal.

Le système 28 insère dans chaque ECM notamment:
- les cryptogrammes CW*ₜ et CW*ₜ₊₁ des mots de contrôle CWₜ et CWₜ₊₁ permettant de désembrouiller les cryptopériodes t et t+1 immédiatement consécutives du canal,
- des conditions d'accès CA destinées à être comparées à des titres d'accès acquis par l'utilisateur, et
- une signature ou une redondance cryptographique MAC permettant de vérifier l'intégrité du message ECM.

Le système 28 peut également insérer dans les messages ECM :
- un indicateur de mode de protection à appliquer en cas d'enregistrement du contenu multimédia, ou
- une interdiction d'enregistrement du contenu multimédia.

Le message ECM contenant la paire de cryptogrammes CW*ₜ/CW*ₜ₊₁ est noté ECMt dans la suite de la description, où l'indice t est un numéro d'ordre identifiant la position temporelle de ce message ECM par rapport aux autres messages ECM différents émis pour désembrouiller le même contenu multimédia.

Ici, l'indice t identifie également la cryptopériode CPₜ désembrouillable à l'aide du mot de contrôle CWₜ contenu dans le message ECMt.

A titre d'illustration, ici, l'embrouillage et le multiplexage des contenus multimédias est conforme au protocole DVB-Simulcrypt (ETSI TS 103 197).

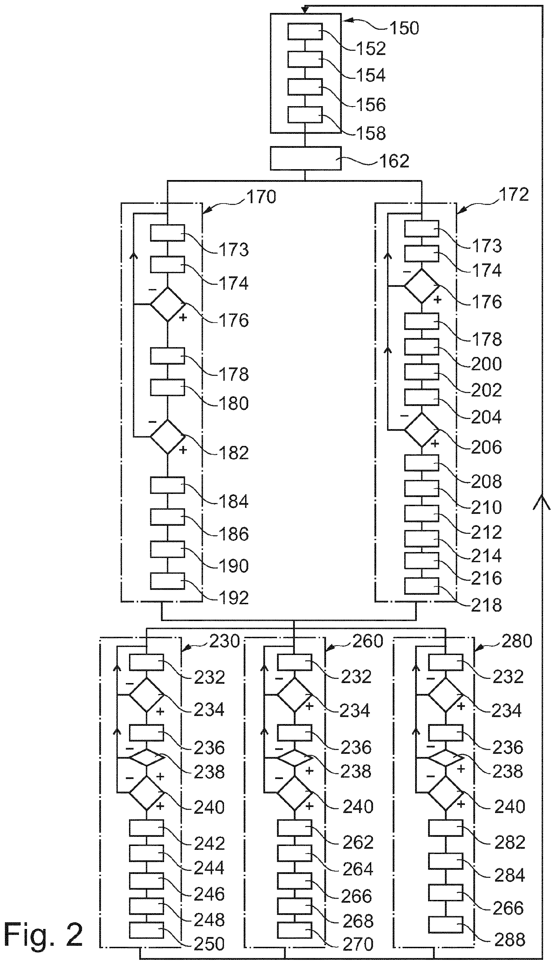

Le système 28 génère également des messages EMM (Entitlement Management Message) dont l'utilisation est décrite à la figure 2. Ces messages EMM contiennent notamment les titres d'accès à destination des terminaux de réception. Dans la pratique, contrairement aux messages ECM utilisés ici, les messages EMM peuvent être adressés à un seul terminal de réception particulier parmi l'ensemble des terminaux du système 2.

Ici, les messages ECM et EMM répondent à la syntaxe définie dans la norme DVB ETR 289 (« Support for use of scrambling and conditional access within digital broadcasting systems »).

Ici, le système 28 est raccordé à une mémoire 34 contenant une table 36. La table 36 associe à chaque identifiant STB-ID d'un terminal de réception différents attributs utilisés pour son fonctionnement lors de l'enregistrement d'un contenu multimédia reçu.

Pour simplifier la figure 1, une vue partielle et agrandie de cette table 36 est représentée sur la figure 1 à côté de la mémoire 34. A chaque identifiant STB-ID, cette table 36 associe :
- un identifiant de foyer House-Id,
- un champ « Record-A » contenant une autorisation ou au contraire une interdiction d'enregistrer les contenus multimédias,
- un champ « Share-A » contenant une autorisation ou au contraire une interdiction de partager le contenu multimédia enregistré avec les différents terminaux du même foyer,
- un champ « Life-T » contenant éventuellement une durée de vie pour une licence associée à un contenu multimédia enregistré,
- un champ KH'^{Kisoft} contenant un cryptogramme d'une clé locale courante KH'k chiffrée avec la clé K_{isoft} propre au terminal identifié par l'identifiant STB-ID,
- un champ KH"^{Kichip} contenant un cryptogramme d'une clé locale KH"ₖ chiffrée avec une clé K_{ichip} propre au terminal identifié par l'identifiant STB-ID,
- un champ KH'''^{Kichip} contenant un cryptogramme d'une clé locale KH'''ₖ chiffrée avec la clé K_{ichip} propre au terminal de réception identifié par l'identifiant STB-ID, et
- un champ « Default-P » contenant un indicateur du mode de protection à appliquer par défaut lors de l'enregistrement d'un contenu multimédia.

L'identifiant House-Id permet d'identifier un foyer parmi tous les foyers du système 2. Un foyer héberge typiquement au moins un et ici généralement plusieurs terminaux de réception de contenus multimédias embrouillés. Un foyer correspond généralement à un domicile privé tel qu'un appartement ou une maison. Ainsi, la table 36 associe les différents terminaux de réception d'un même foyer au même identifiant House-Id de ce foyer.

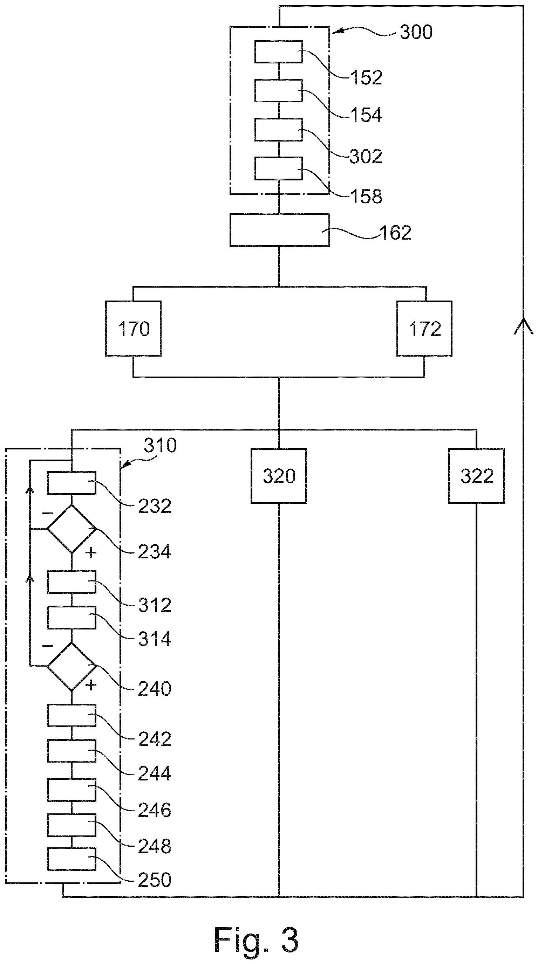

Le système 28 est typiquement réalisé à partir d'un calculateur électronique programmable capable d'exécuter des instructions sur un support d'enregistrement d'informations pour la mise en oeuvre du procédé des figures 2 ou 3.

Un système 38 de gestion des abonnés est associé à la mémoire 34. Ce système 38 est plus connu sous l'acronyme de SMS (« Subscriber Management System »). Le système 38 permet notamment de remplir et de modifier le contenu des champs de la table 36.

Le système 2 comporte une multitude de foyers chacun équipé d'un ou plusieurs terminaux de réception. Ces terminaux sont plus connus sous le terme anglais de « set-top box ». Pour simplifier la figure 1, seuls trois foyers 40 à 42 ont été représentés.

Le foyer 40 va être décrit dans le cas particulier où celui-ci comporte quatre terminaux 50, 52, 54 et 56 de réception de contenus multimédias embrouillés. Ces terminaux sont raccordés les uns aux autres par l'intermédiaire d'un réseau domestique 60. Le réseau 60 est un réseau local du foyer 40. Ce réseau 60 est ici raccordé au réseau 8 par l'intermédiaire d'un modem ADSL (Asymmetric Digital Subscriber Line) d'un fournisseur d'accès à Internet. Ici, ce modem ADSL comporte également un routeur. Généralement, un foyer comporte au plus un seul routeur. Le réseau 60 est un réseau filaire, par exemple du type Ethernet, et/ou un réseau sans fil tel qu'un réseau WiFi.

Dans ce mode de réalisation, chaque terminal a la capacité d'enregistrer un contenu multimédia et de lire un contenu multimédia enregistré. De plus, chacun de ces terminaux a généralement la capacité de désembrouiller, au fur et à mesure qu'il est reçu, un contenu multimédia diffusé par la tête de réseau 6 pour l'afficher en clair sur un écran. Pour simplifier la description et la figure, on suppose ici que seuls certains terminaux sont utilisés pour enregistrer un contenu multimédia tandis que seuls d'autres terminaux sont utilisés pour lire le contenu multimédia enregistré. Par la suite, les terminaux utilisés pour enregistrer sont appelés « enregistreurs » et les terminaux utilisés pour lire le contenu multimédia enregistré sont appelés « lecteurs ».

Pour les enregistreurs, seules les caractéristiques utiles pour l'enregistrement d'un contenu multimédia sont décrites. Les caractéristiques d'un enregistreur pour lire un contenu multimédia enregistré sont par exemple identiques à celles décrites pour les lecteurs. De façon réciproque, seules les caractéristiques de chaque lecteur utiles pour lire un contenu multimédia sont décrites ici en détail. Les caractéristiques de ces lecteurs pour enregistrer un contenu multimédia sont par exemple identiques à celles décrites en regard des enregistreurs.

Plus précisément, ici, les terminaux 50 et 52 sont décrits comme des enregistreurs tandis que les terminaux 54 et 56 sont décrits comme des lecteurs.

L'enregistreur 50 est équipé d'un calculateur électronique 64 raccordé à un support d'enregistrement 66. Ce calculateur 64 est apte à exécuter les instructions enregistrées sur le support 66 pour mettre en oeuvre le procédé de la figure 2 ou 3. A cet effet, le support 66 comporte notamment les instructions d'un module 68 d'enregistrement et d'un agent 70 d'accès conditionnel.

Le calculateur 64 est également raccordé à une mémoire de masse 72 destinée à contenir les contenus multimédias enregistrés. Cette mémoire 72 est typiquement un périphérique de stockage de masse tel qu'un disque dur, une clé USB (Universal Serial Bus) ou similaires.

L'enregistreur 50 comprend également un processeur de sécurité qui traite des informations confidentielles telles que des clés cryptographiques. Pour préserver la confidentialité de ces informations, ce processeur est conçu pour être le plus robuste possible vis-à-vis des tentatives d'attaque menées par des pirates informatiques. Il est donc plus robuste vis-à-vis de ces attaques que les autres composants de l'enregistreur 50. A cet effet, le processeur incorpore son propre calculateur 76 raccordé à sa propre mémoire 78 uniquement accessible par le processeur 76. Typiquement, la mémoire 78 est incorporée dans le processeur pour que celle-ci soit protégée et rendue la plus robuste possible. Ici, le processeur est un processeur de sécurité amovible tel qu'une carte à puce 74.

La mémoire 78 comprend notamment une clé cryptographique K_{isc} propre à la carte à puce 74 et un identifiant SC-ID de cette carte à puce. Dans cette description, on dit qu'un clé est « propre à » un dispositif lorsqu'elle permet d'identifier de façon unique ce dispositif parmi l'ensemble des dispositifs du système 2. Elle est donc unique pour ce dispositif. L'identifiant SC-ID permet d'identifier la carte à puce 74 parmi l'ensemble des cartes à puce du système 2.

Seule la carte à puce 74 du système 2 possède la clé K_{isc}. Typiquement, cette clé K_{isc} est inscrite lors de la personnalisation de la carte à puce, c'est-à-dire lors de la fabrication de celle-ci. L'indice « i » de la clé K_{isc} identifie le terminal.

L'enregistreur 52 est similaire à l'enregistreur 50 sauf que le calculateur 64 est remplacé par un processeur 80 de sécurité.

Ce processeur 80 comprend un microprocesseur 82 programmable apte à exécuter des instructions enregistrées sur un support d'enregistrement d'informations. A cet effet, le processeur 80 est raccordé à une mémoire 84 comportant des instructions pour la mise en oeuvre du procédé de la figure 2 ou 3. Cette mémoire 84 comprend notamment les instructions d'un module 86 d'enregistrement et d'un agent 88 d'accès conditionnel. Le processeur 80 comprend également plusieurs coprocesseurs aptes à exécuter des instructions en parallèle de celles exécutées par le microprocesseur 82. Ces coprocesseurs sont destinés à réaliser plus rapidement des tâches spécifiques. Ici, le processeur 80 comprend au moins un coprocesseur cryptographique 96 conçu pour exécuter les opérations de chiffrement et de déchiffrement.

Le coprocesseur cryptographique 96 comprend une mémoire interne 98 dans laquelle sont enregistrées différentes informations confidentielles. Par exemple, une clé K_{chip} ainsi que l'identifiant STB-ID de l'enregistreur 52 sont enregistrés dans cette mémoire 98. La clé K_{ichip} est propre à l'enregistreur 52 et n'est connue d'aucun autre enregistreur. Par exemple, cette clé K_{ichip} est enregistrée lors de la fabrication du processeur 80. L'indice « i » de la clé K_{ichip} identifie le terminal.

Le processeur 80 peut comporter d'autres coprocesseurs. Ces autres coprocesseurs sont désignés par le nom de la fonction qu'ils remplissent. Par exemple, ici, le processeur 80 comprend également les coprocesseurs suivants :
- un démultiplexeur 90,
- un désembrouilleur 92, et
- un embrouilleur 94.

Typiquement, le microprocesseur 82 ainsi que l'ensemble de ces coprocesseurs sont réalisés sur le même morceau de silicium appelé également « puce ». Ils sont donc fabriqués en même temps.

Le processeur 80 est également raccordé à une mémoire de masse 100 destinée à contenir les contenus multimédias enregistrés. Cette mémoire 100 est par exemple identique à la mémoire 72.

L'enregistreur 52 comporte également un processeur de sécurité amovible 102 tel qu'une carte à puce. Par exemple, structurellement, cette carte à puce 102 est identique à la carte à puce 74. La clé K_{isc} et l'identifiant SC-ID contenu dans sa mémoire 78 sont différents de ceux contenus dans la mémoire 78 de la carte à puce 74.

Le lecteur 54 est capable de lire un contenu multimédia enregistré par l'un quelconque des enregistreurs 50, 52 et d'afficher ce contenu multimédia enregistré en clair sur un afficheur 110. L'afficheur 110 est par exemple un écran.

Le lecteur 54 comporte un calculateur électronique 112 programmable raccordé à une mémoire 114. Le calculateur 112 est apte à exécuter des instructions enregistrées dans la mémoire 114 pour mettre en oeuvre le procédé de la figure 2 ou 3. A cet effet, la mémoire 114 comprend notamment les instructions :
- d'un module 116 de lecture de contenu multimédia,
- d'un agent 118 d'accès conditionnel, et
- d'un désembrouilleur 120.

L'identifiant STB-ID ainsi qu'une clé K_{isoft} de ce lecteur 54 sont par exemple stockés dans la mémoire 114. La clé K_{isoft} est propre au lecteur 54.

Le lecteur 56 est identique au lecteur 54 sauf que le calculateur 112 est remplacé par un processeur 130 de sécurité. La structure de ce processeur 130 est similaire à celle du processeur 80 précédemment décrit. En particulier, il comporte un microprocesseur 132 capable d'exécuter des instructions enregistrées dans une mémoire 134 raccordée à ce processeur 130. Il comporte également les coprocesseurs suivants :
- un démultiplexeur 136,
- un décodeur 138,
- un désembrouilleur 140, et
- un coprocesseur cryptographique 142 contenant sa propre mémoire 144 à l'intérieur de laquelle sont enregistrées différentes informations confidentielles telles que la clé cryptographique K_{ichip} et l'identifiant STB-ID du lecteur 56.

Une clé K_{isoft} propre à ce lecteur est également enregistrée dans la mémoire 144.

Ici, le lecteur 56 est raccordé à un afficheur 146, par exemple, identique à l'afficheur 110.

Les autres foyers du système 2 tels que les foyers 41 ou 42 comportent un ou plusieurs enregistreurs tels que les enregistreurs 50 et 52 et un ou plusieurs lecteurs tels que les lecteurs 54 ou 56. Les foyers 41 et 42 correspondent à des identifiants de foyer House-Id différents de celui du foyer 40.

Ici, seuls les terminaux du foyer 40 sont associés à leur identifiant House-Id commun dans la table 36.

Le fonctionnement du système 2 va maintenant être décrit en regard du procédé de la figure 2 dans le cas particulier du foyer 40. Ce qui est décrit pour le foyer 40 s'applique aux autres foyers du système 2.

On procède d'abord à une phase d'initialisation ou de réinitialisation 150.

Lors de cette phase 150 et plus précisément lors d'une étape 152, pour chaque identifiant House-Id, le système 28 génère un jeu de trois clés locales KH'k, KH"ₖ et KH'''ₖ. L'indice « k » est l'indice de clé et identifie la version de la clé. Dans la suite de cette description, on désigne par «KHₖ» l'une quelconque de ces trois clés.

Chacune de ces clés correspond à un mode de protection particulier d'un contenu multimédia enregistré. Ici, les trois modes de protection suivants sont utilisés en allant du moins robuste vers le plus robuste :
- une protection logicielle des mots de contrôle,
- une protection matérielle des mots de contrôle, et
- une protection par réembrouillage local du contenu multimédia.

Ces trois modes correspondent, dans l'ordre, aux clés KH'k, KH"k et KH'''ₖ.

La protection matérielle nécessite l'utilisation d'un processeur de sécurité protégé par un composant matériel. Ici, seul les enregistreurs 50 et 52 et le lecteur 56 peuvent mettre en oeuvre ce mode de protection. De même, la protection par réembrouillage local nécessite l'utilisation d'un embrouilleur implémenté dans un processeur de sécurité matériel. Ici, seul l'enregistreur 52 et le lecteur 56 peuvent mettre en oeuvre ce mode de protection. A l'inverse, la protection logicielle ne nécessite pas l'utilisation de processeur de sécurité matériel. Elle peut donc être mise en oeuvre par tous les terminaux.

Lors de l'étape 152, l'indice k de clé est incrémenté d'un pas prédéterminé.

Lors d'une étape 154, pour chaque terminal associé à l'identifiant House-Id du foyer 40 dans la table 36, le système 28 génère un cryptogramme KH'ₖ^{Kisoft} avec la clé K_{isoft} propre à ce terminal. Dans la suite de cette description, on note «A^{B}» le cryptogramme obtenu en chiffrant la donnée A à l'aide de la clé B.

Pour chaque terminal associé à l'identifiant House-Id du foyer 40 et équipé d'un processeur de sécurité matériel apte à ôter une protection matérielle, et uniquement pour ceux-là, le système 28 génère un cryptogramme KH"ₖ^{Kichip} avec la clé K_{ichip} de ce terminal. Enfin, pour chaque terminal associé à l'identifiant House-Id du foyer 40 et équipé d'un processeur de sécurité matériel apte à mettre en oeuvre une protection par réembrouillage local, et uniquement pour ceux-là, le système 28 génère un cryptogramme KH'''ₖ^{Kichip} avec la clé K_{ichip} de ce terminal.

Les cryptogrammes KH'ₖ^{Kisoft}, KH"ₖ^{Kichip} et KH'''ₖ^{Kichip} sont enregistrés, respectivement, dans les champs KH'^{Kisoft}, KH"^{Kichip} et KH'''^{Kichip} de la table 36 dans la colonne correspondant à l'identifiant STB-ID de ce terminal. Si l'un des cryptogrammes n'a pas été généré car le terminal n'est pas capable de mettre en oeuvre ce mode de protection, alors le champ est vide.

Lors d'une étape 156, pour chaque terminal dont le contenu du champ « Record-A » de la table 36 indique qu'il est autorisé à enregistrer des contenus multimédias, la tête de réseau 6 transmet un message EMM comportant le contenu des champs « Record-A », « Default-P », « Life-T », « Share-A », « KH'^{Kisoft}», « KH"^{Kichip}», « KH'''^{Kichip}» ainsi que l'indice de clé k.

Lors de cette étape 156, la tête de réseau 6 transmet également à chaque carte à puce des terminaux du foyer 40 les clés locales KH'k et KH"k par l'intermédiaire des agents d'accès conditionnel. Plus précisément, la tête de réseau 6 transmet uniquement les cryptogrammes KH'ₖ^{Kisc} et KH"ₖ^{Kisc} obtenus avec la clé K_{isc} de cette carte. Le contenu du champ « Default-P » associé à l'identifiant STB-ID du terminal dans lequel elle est insérée lui est également transmis. Lors de cette transmission, le champ « Default-P » est protégé à l'aide d'un secret propre à la carte à puce.

Lors d'une étape 158, en réponse à la réception de ces messages EMM, chaque agent d'accès conditionnel des terminaux 50, 52, 54 et 56 enregistre la configuration reçue et les cryptogrammes KHₖ^{Ki} qui lui ont été transmis ainsi que l'indice k de la clé locale.

Lors de cette étape 158, les cartes à puce 74 et 102 déchiffrent les cryptogrammes reçus pour obtenir les clés locales KH'ₖ et KH"ₖ et enregistrent ces clés dans leurs mémoires respectives 78. Le contenu du champ « Default-P » est également enregistré.

La phase 150 se termine alors.

Lors d'une étape 162, la tête de réseau 6 diffuse un flux multimédia embrouillé dans lequel le contenu multimédia est multiplexé avec les messages ECMₜ correspondant. Les messages ECMₜ correspondant sont les messages ECMₜ contenant les cryptogrammes des mots de contrôle permettant de désembrouiller ce contenu multimédia.

Lorsque l'utilisateur le souhaite, celui-ci commande l'un des enregistreurs 50 ou 52 pour enregistrer le contenu multimédia actuellement diffusé par la tête de réseau 6. Ici, deux phases 170 et 172 d'enregistrement distinctes vont être décrites.

La phase 170 correspond à un enregistrement du contenu multimédia avec une protection logicielle ou matérielle. Par exemple, cette phase 170 est mise en oeuvre par l'enregistreur 50.

La phase 170 débute par une étape 173 d'acquisition d'une commande d'enregistrement du contenu multimédia actuellement diffusé.

En réponse, lors d'une étape 174, le module 68 reçoit et démultiplexe le flux multimédia reçu pour en extraire un flux SPTS (Single Program Transport Stream) contenant les composantes vidéo, audio et télétexte d'un seul contenu multimédia. Le module 68 extrait également de ce flux multimédia les messages ECMₜ correspondant au contenu multimédia à enregistrer et les transmet à l'agent 70 d'accès conditionnel.

Lors d'une étape 176, l'agent 70 procède à différentes vérifications. Par exemple, il vérifie que l'enregistreur 50 est autorisé à enregistrer des contenus multimédias. Cette vérification se fait par exemple à l'aide du contenu du champ « Record-A » précédemment reçu. Il vérifie également lors de cette étape que le message ECMt correspondant au contenu multimédia ne comporte aucune interdiction d'enregistrement. L'incorporation dans les messages ECMₜ d'une interdiction d'enregistrement permet d'empêcher l'enregistrement de certains contenus multimédias reçus, par exemple, pour respecter des droits d'auteur.

Enfin, il vérifie également si le message ECMₜ impose un mode de protection pour ce contenu multimédia lors de son enregistrement. Si c'est le cas, l'agent 70 vérifie que ce mode de protection est supporté par l'enregistreur 50. Par exemple, dans le cas de l'enregistreur 50, celui-ci supporte les modes de protection logicielle et matérielle mais n'est pas capable de mettre en oeuvre la protection par réembrouillage local.

Si pour l'une des raisons évoquées ci-dessus, l'enregistrement du contenu multimédia n'est pas possible, alors le procédé retourne à l'étape 173. Dans le cas contraire, l'agent 70 procède à une étape 178.

Lors de l'étape 178, l'agent 70 détermine le mode de protection à mettre en oeuvre. Si le mode de protection est forcé par une instruction contenue dans les messages ECMₜ, ce mode de protection imposé est choisi. Si aucun mode de protection n'est imposé par le contenu des messages ECMₜ, l'agent 70 choisit le mode de protection par défaut contenu dans le champ « Default-P». Connaître le mode de protection à appliquer permet à l'agent 70 de déterminer vers quel processeur de sécurité doivent être dirigés les messages ECMₜ reçus. Par exemple, si le mode de protection logicielle ou matérielle doit être appliqué, alors les messages ECMₜ sont transmis à la carte à puce insérée dans ce terminal. Si la protection par réembrouillage local doit être mise en oeuvre, les messages ECMₜ sont directement dirigés vers le processeur de sécurité 80 de ce terminal. Dans le cadre de la phase 170, on suppose que c'est la protection logicielle ou matérielle qui doit être appliquée.

Ensuite, toujours lors de cette étape 178, il génère un identifiant RECORD-ID permettant d'identifier le contenu multimédia enregistré. Par exemple, cet identifiant RECORD-ID est fonction de la date de début d'enregistrement ainsi que de l'identifiant STB-ID de l'enregistreur 50.

Lors d'une étape 180, l'agent 70 envoie l'identifiant RECORD-ID au module 68 et chaque message ECMₜ reçu à la carte à puce 74.

Lors d'une étape 182, la carte à puce 74 procède à différentes vérifications et détermine le mode de protection à appliquer. Ici, la carte à puce 74 vérifie les conditions suivantes :
- le message ECMₜ correspondant au contenu multimédia ne comporte aucune interdiction d'enregistrement ;
- lorsqu'un mode de protection est imposé par les messages ECMₜ, ce mode de protection est supporté par l'enregistreur 50 en vérifiant la présence de la clé KH'ₖ ou KH"ₖ nécessaire pour ce mode de protection dans la mémoire 78,
- les titres d'accès qu'elle contient correspondent aux droits d'accès contenus dans les messages ECMₜ.

Si l'une de ces conditions n'est pas satisfaite, l'enregistrement est inhibé et le procédé retourne à l'étape 173.

Si toutes ces conditions sont satisfaites, la carte à puce sélectionne le mode de protection à appliquer. Cette sélection est réalisée comme celle décrite pour l'agent 70 sauf que le champ « Default-P » utilisé est celui enregistré dans la mémoire 78. Le fait de déterminer à nouveau le mode de protection à appliquer dans la carte à puce rend plus difficile toute tentative de falsification du mode de protection à appliquer.

Ensuite, lors d'une étape 184, la carte à puce déchiffre les cryptogrammes CW*ₜ et CW*ₜ₊₁ contenus dans les messages ECMt reçus pour obtenir les mots de contrôle CWₜ et CWₜ₊₁ en clair. Ce déchiffrement est réalisé à l'aide de la clé d'abonnement Kₐ. La clé Kₐ est une clé qui est transmise par la tête de réseau, par message EMM, aux terminaux ayant souscrit un abonnement permettant de désembrouiller le contenu multimédia. Typiquement, cette clé Kₐ est renouvellée tous les mois. La clé Kₐ est la même pour tous les terminaux autorisés à désembrouiller le contenu multimédia même si ces terminaux appartiennent à des foyers différents.

Lors d'une étape 186, la carte à puce 74 protège le contenu multimédia enregistré. A cet effet, ici, elle chiffre les mots de contrôle CWₜ et CWₜ₊₁ avec la clé locale KHₖ correspondant au mode de protection sélectionné pour obtenir les cryptogrammes CWₜ^{KHk} et CWₜ₊₁^{KHk}. Par exemple, si le mode de protection sélectionné est la protection logicielle, la clé locale utilisée est KH'ₖ. Si le mode de protection sélectionné est la protection matérielle, la clé locale utilisée est KH"ₖ. Ensuite, les cryptogrammes CWₜ^{KHk} et CWₜ₊₁^{KHk} sont transmis à l'agent 70.

Lors d'une étape 190, en réponse, l'agent 70 construit une licence pour la lecture du contenu multimédia enregistré. Plus précisément, lors de l'étape 190, l'agent 70 associe à chaque cryptogramme CWₜ^{KHk} un index temporel ECM-REFₜ. L'index temporel ECM-REFₜ identifie la cryptopériode CPₜ du contenu multimédia qui doit être désembrouillée avec le mot de contrôle CWₜ. Par exemple, l'index temporel ECM-REFₜ est un compteur temporel incrémenté d'un pas prédéterminé à chaque réception d'un nouveau message ECMₜ.

Ensuite, l'agent 70 enregistre chaque cryptogramme CWₜ^{KHk} associé à son index temporel ECM-REFₜ dans un bloc de mots de contrôle.

De préférence, l'agent 70 insère également le niveau moral requis et le mode de protection du contenu multimédia enregistré. Enfin, lors de l'étape 190, l'agent 70 détermine la durée de vie de la licence en ajoutant à la date courante, la durée contenue dans le champ « Life-T » reçu. L'indice k de la clé locale KHk utilisée pour chiffrer les mots de contrôle est également inséré dans la licence.

Une fois cette licence construite, lors d'une étape 192, le module 68 enregistre le contenu multimédia embrouillé dans la mémoire 72 associé à la licence construite par l'agent 70.

On notera que lors de la phase 170, le contenu multimédia enregistré n'est pas désembrouillé puis réembrouillé à nouveau. L'enregistrement du contenu multimédia en mode de protection matérielle des mots de contrôle est réalisé de façon identique à ce qui a été précédemment décrit sauf que la clé KH"k est sélectionnée par la carte à puce 74 lors de l'étape 186.

La phase 172 correspond à l'enregistrement d'un contenu multimédia avec une protection par réembrouillage local. Cette phase 172 est ici mise en oeuvre par l'enregistreur 52 car l'enregistreur 50 est dépourvu de cette capacité.

La phase 172 débute par les mêmes étapes 173 à 178 que celles précédemment décrites sauf qu'elles sont mises en oeuvre par le module 86 et l'agent 88. Lors de l'étape 178, on suppose que le mode de protection sélectionné est le réembrouillage local.

Ensuite, lors d'une étape 200, l'agent 88 d'accès conditionnel calcule implicitement un mot de contrôle CW' en générant une clé, c'est-à-dire en tirant un nombre aléatoire, que l'on considère comme donnant la valeur du cryptogramme CW'^{KH'''k}. Puis, il transmet ce cryptogramme CW'^{KH'''k} au processeur 80.

Lors d'une étape 202, le coprocesseur cryptographique 96 déchiffre le cryptogramme CW'^{KH'''k} avec sa clé KH'"ₖ pour obtenir un mot de contrôle CW'. La clé KH'"ₖ est utilisée car ici la protection par réembrouillage local a été sélectionnée lors de l'étape 178. Lors de cette étape, l'agent 88 construit également une licence comme décrit en regard de l'étape 190 sauf que le bloc de mots de contrôle est remplacé par le cryptogramme CW'^{KH"'k}.

Lors d'une étape 204, l'agent 88 envoie chaque message ECMt reçu à la carte à puce.

Lors d'une étape 206, la carte à puce 102 vérifie si elle possède les titres d'accès permettant de désembrouiller ce contenu multimédia.

Si la carte à puce 102 possède les titres d'accès lui donnant le droit de désembrouiller le contenu multimédia reçu, lors d'une étape 208, la carte à puce 102 déchiffre les cryptogrammes CW*ₜ contenus dans le message ECMₜ à l'aide de la clé d'abonnement Kₐ. Elle obtient alors les mots de contrôle en clair CWₜ.

Lors d'une étape 210, le calculateur 76 chiffre ces mots de contrôle CWₜ en clair à l'aide d'une clé de session secrète Kₛ pour obtenir des cryptogrammes CWₜ^{Ks}. Ces cryptogrammes sont envoyés au processeur 80.

Lors d'une étape 212, le coprocesseur cryptographique 94 déchiffre les cryptogrammes CWₜ^{Ks} pour obtenir les mots de contrôle en clair CWt. L'utilisation de la clé de session Kₛ permet donc de sécuriser la transmission des mots de contrôle entre la carte à puce 102 et le processeur 80. Cette clé Kₛ est différente des clés K_{isoft} et K_{ichip} du processeur 80.

Lors d'une étape 214, le désembrouilleur 92 désembrouille le contenu multimédia reçu à l'aide des mots de contrôle CWₜ pour obtenir le contenu multimédia en clair.

Ensuite, lors d'une étape 216, l'embrouilleur 94 embrouille ce contenu multimédia en clair à l'aide du mot de contrôle CW'. Pour l'embrouillage du contenu multimédia enregistré, un seul mot de contrôle CW' est ici utilisé. En effet, on suppose ici que l'algorithme de chiffrement utilisé est suffisamment robuste pour qu'un seul mot de contrôle suffise. Par exemple, l'algorithme de chiffrement utilisé est l'algorithme AES (Advanced Encryption Standard).

Une fois réembrouillé, lors d'une étape 218, le contenu multimédia et la licence construite sont enregistrés par le module 86 dans la mémoire 100.

On remarquera que pour la protection par réembrouillage local, l'utilisation de l'index temporel ECM-REFₜ est rendue inutile car un seul mot de contrôle CW' est utilisé pour embrouiller toutes les cryptopériodes du contenu multimédia enregistré.

Les phases 170 et 172 peuvent être exécutées en même temps ou l'une après l'autre et sur le même terminal ou sur des terminaux différents.

Les contenus multimédias enregistrés lors des phases 170 ou 172 peuvent être lus par un autre lecteur du foyer mécaniquement indépendant de l'enregistreur. Trois procédés de lecture sont possibles en fonction du mode de protection mis en oeuvre lors de l'enregistrement du contenu multimédia. Chacun de ces procédés de lecture correspond à l'une des phases de lecture décrites maintenant.

Lors d'une phase 230, un contenu multimédia enregistré avec une protection logicielle est lu. Cette phase 230 est décrite dans le cas particulier où le lecteur est le lecteur 54.

Au début de la phase 230, lors d'une étape 232, un utilisateur sélectionne un contenu multimédia enregistré par l'un des enregistreurs du foyer 40. Par exemple, lors de cette étape 232, un catalogue des différents contenus multimédias enregistrés par les enregistreurs du foyer 40 est affiché. Ce catalogue contient typiquement le nom, la durée, le numéro de la chaîne sur laquelle a été enregistré le contenu multimédia, l'identifiant de l'enregistreur ayant enregistré ce contenu multimédia ainsi que l'identifiant du contenu multimédia RECORD-ID. Lors de cette étape 132, on suppose qu'un contenu multimédia enregistré dans la mémoire 72 de l'enregistreur 50 est sélectionné.

Lors d'une étape 234, le lecteur vérifie s'il est autorisé ou non à lire un contenu multimédia. Ici, on suppose qu'un lecteur est autorisé à lire un contenu multimédia enregistré à partir du moment où celui-ci a également reçu l'autorisation d'enregistrer des contenus multimédias. Ainsi, cette vérification est faite à partir du contenu du champ « Record-A ». Dans la négative, le procédé retourne à l'étape 232.

Lors d'une étape 236, s'il est autorisé à lire, l'agent 118 envoie une demande de licence à l'enregistreur 50 identifié à partir de l'identifiant STB-ID contenu dans le catalogue de contenus multimédias. Cette demande inclut notamment l'identifiant RECORD-ID du contenu multimédia sélectionné.

Lors d'une étape 238, en réponse à cette demande, l'enregistreur 50 vérifie à partir du contenu de son champ « Share-A » s'il est autorisé à partager un contenu multimédia enregistré. Dans l'affirmative, l'agent 70 transmet la licence du contenu multimédia associé à l'identifiant RECORD-ID. Dans le cas contraire, le procédé retourne à l'étape 232. Ici, on suppose que le partage est autorisé.

L'agent 118 reçoit cette licence et vérifie, lors d'une étape 240 :
- si la durée de vie de la licence a expiré, et
- si le mode de protection du contenu multimédia est accessible pour le lecteur 54.

En particulier, lors de l'étape 240, l'agent 118 vérifie qu'il est en possession du cryptogramme KH'ₖ^{Kisoft} correspondant au mode de protection et à l'indice k de clé locale contenus dans la licence. Dans la négative, le procédé retourne à l'étape 232.

Dans l'affirmative, lors d'une étape 242, l'agent 118 déchiffre le cryptogramme KH'ₖ^{Kisoft} avec sa clé K_{isoft}. Le cryptogramme est sélectionné, par l'agent 118, en fonction du niveau de protection et de l'indice k de clé locale demandés dans la licence parmi l'ensemble des cryptogrammes de clés locales mémorisés dans le lecteur 54. A l'issue de l'étape 242, la clé locale KH'ₖ est obtenue.

Ensuite, lors d'une étape 244, l'enregistreur 50 transmet, par exemple en lecture de flux, le contenu multimédia enregistré et les index temporels ECM-REFₜ au lecteur 54 à partir de la mémoire 72. La transmission en lecture de flux est également plus connue sous le terme anglais de « streaming ».

Lors d'une étape 246, le module 116 fournit l'index temporel ECM-REFₜ de la cryptopériode à désembrouiller à l'agent 118.

En réponse, lors d'une étape 248, l'agent 118 recherche le cryptogramme CWₜ^{KHk} associé à l'index temporel ECM-REFₜ reçu dans le bloc de mots de contrôle de la licence reçue.

Ensuite, l'agent 118 déchiffre ce cryptogramme trouvé avec la clé locale KH'ₖ pour obtenir le mot de contrôle CWₜ en clair. A la fin de l'étape 248, le mot de contrôle CWₜ en clair est transmis au désembrouilleur 120.

Lors d'une étape 250, le désembrouilleur 120 désembrouille le contenu multimédia enregistré à l'aide des mots de contrôle en clair CWₜ reçus. Le contenu multimédia en clair est alors affiché de façon directement perceptible et compréhensible par un être humain sur l'écran 110.

La lecture d'un contenu multimédia enregistré avec une protection matérielle va maintenant être décrite en regard d'une phase 260 de lecture. La phase 260 est par exemple mise en oeuvre par le lecteur 56 puisque celui-ci est équipé d'un processeur de sécurité 130. La phase 260 débute par les mêmes opérations 232 à 240 que celles déjà décrites en regard de la phase 230.

Ensuite, lors d'une étape 262, le processeur 130 sélectionne le cryptogramme KH"ₖ^{Kichip} en fonction du niveau de protection et de l'indice de clé k contenus dans la licence reçue. Ce cryptogramme est transmis au coprocesseur 142 qui le déchiffre avec sa propre clé K_{ichip} contenue, par exemple, dans la mémoire 144.

Ensuite, on procède à des étapes 264, 266, 268 et 270 identiques, respectivement, aux étapes 244, 246, 248 et 250 à l'exception du fait qu'elles sont exécutées par le processeur de sécurité 130 et non pas les modules et agent logiciels 116, 118 et 120 et que la clé KH"ₖ est utilisée à la place de la clé KH'ₖ. En particulier, le désembrouillage est réalisé par le désembrouilleur 140.

Lors d'une phase 280, le lecteur 56 est utilisé pour lire un contenu multimédia enregistré avec une protection par réembrouillage local.

La phase 280 débute par les mêmes étapes 232 à 240 que celles décrites en regard de la phase 230.

Ensuite, lors d'une étape 282, le processeur 130 sélectionne le cryptogramme KH'''ₖ^{Kichip} en fonction du niveau de protection et de l'indice k de clé locale contenus dans la licence. Lors de cette étape, le corprocesseur cryptographique 142 déchiffre ce cryptogramme KH'''ₖ^{Kichip} à l'aide de sa clé K_{ichip} pour obtenir la clé locale KH'''ₖ.

Ensuite, lors d'une étape 284, le cryptogramme CW'^{KH"'k} est extrait, par le processeur 130, de la licence reçue puis déchiffré à l'aide de sa clé KH'''ₖ. Il obtient alors le mot de contrôle CW' en clair.

Lors d'une étape 286, le désembrouilleur 140 désembrouille le contenu multimédia embrouillé avec le mot de contrôle CW' en clair pour obtenir le contenu multimédia désembrouillé.

Enfin, lors d'une étape 288, le contenu multimédia désembrouillé est transmis à l'afficheur 146 de manière à ce qu'il soit affiché de façon perceptible et directement compréhensible par un être humain.

Le procédé ci-dessus permet d'activer et de désactiver facilement le partage de contenu multimédia enregistré avec un terminal particulier du foyer 40. Par exemple, pour désactiver le partage avec les autres terminaux du foyer de nouveaux contenus multimédias susceptibles d'être enregistrés, la tête de réseau 6 envoie un message EMM à ce terminal pour changer le contenu du champ « Share-A » et interdire le partage.

Il est également possible de supprimer d'une carte à puce les clés locales KH'ₖ et KH"ₖ pour limiter le fonctionnement du terminal. On peut supprimer toutes les clés locales de la carte à puce pour empêcher complétement cet enregistreur de partager les nouveaux contenus multimédias enregistrés avec les autres lecteurs du foyer. On peut également ne supprimer qu'une seule clé pour autoriser l'enregistrement de contenu multimédia partageable uniquement avec un mode de protection spécifique.

De façon similaire, pour interdire la lecture de contenu multimédia enregistré par l'un des lecteurs du foyer 40, la tête de réseau 6 envoie un message EMM contenant des instructions pour effacer les cryptogrammes KH'ₖ^{Kisoft}, KH"ₖ^{Kichip} KH"'ₖ^{Kichip}.

Le contenu du champs « Record-A » peut également être modifié grâce à l'envoi de nouveau message EMM pour changer les autorisations d'enregistrement.

Pour des raisons de sécurité ou pour ajouter ou révoquer un terminal dans le foyer, les clés locales KH'ₖ, KH"ₖ et KH'"ₖ sont renouvelées. Dans ces conditions, une nouvelle phase 150 d'initialisation est réitérée. Lors de cette nouvelle phase 150, de nouvelles clés locales KH'ₖ₊₁, KH"ₖ₊₁ et KH'"ₖ₊₁ sont générées pour le foyer 40. L'indice de clé k est également incrémenté. En réponse à la réception de ce nouveau jeu de clés locales, les cartes à puce effacent l'ancien jeu de clés locales et le remplacent par le nouveau jeu de clés locales. En effet, les clés locales contenues dans les cartes à puce sont uniquement utilisées pour enregistrer les nouveaux contenus multimédias. La carte à puce n'a donc pas besoin d'enregistrer les anciennes clés locales utilisées.

Par contre, les agents d'accès conditionnel des différents terminaux du foyer 40 enregistrent les nouveaux cryptogrammes KH'ₖ₊₁^{Kisoft}, KH"ₖ₊₁^{Kichip} et KH"'ₖ₊₁^{Kichip} et n'effacent pas les cryptogrammes KH'ₖ^{Kisoft}, KH"ₖ^{Kichip} et KH'"ₖ^{Kichip}. En effet, ces anciens cryptogrammes sont utiles pour lire un contenu multimédia enregistré avant le renouvellement des clés locales. Lors de chaque lecture d'un contenu multimédia, la bonne clé locale est sélectionnée grâce à l'indice de clé k associé à la licence du contenu multimédia enregistré. Le renouvellement des clés KH'ₖ, KH"ₖ et KH'"ₖ permet de révoquer un terminal du foyer. En effet, le terminal révoqué n'est plus associé à l'identifiant House-Id du foyer dans la table 36. Par conséquent, il ne reçoit pas les cryptotragrammes KH'ₖ₊₁^{Kisoft}, KH"ₖ₊₁^{Kichip} et KH"'ₖ₊₁^{Kichip}. Il ne peut donc pas lire ou enregistrer un contenu multimédia protégé avec l'une des clés KH'ₖ₊₁, KH"ₖ₊₁ et KH'"ₖ₊₁ et donc partager ce contenu multimédia avec les autres terminaux du foyer. A l'inverse le renouvellement des clés KH'ₖ, KH"ₖ et KH'"ₖ permet d'ajouter un nouveau terminal au foyer. Dans ce cas, l'identifiant STB-ID de nouveau terminal doit être associé à l'identifiant House-Id du foyer dans la table 36 avant le lancement de la phase 150 de réinitialisation.

Dans le cas particulier de l'ajout d'un terminal au foyer, il peut être prévu que dès qu'un nouvel identifiant STB-ID est associé à l'identifiant House-Id, la tête de réseau transmet à ce terminal les cryptogrammes des clés KH'ₖ, KH"ₖ et KH'"ₖ pour l'indice k courant mais également les précédentes versions KH'ₖ₋ⱼ, KH"ₖ₋ⱼ et KH"'ₖ₋ⱼ de ces clés, où j est un entier naturel variant entre 1 et k. Ainsi, le nouveau terminal du foyer peut lire des contenus multimédias protégés avec une précédente version des clés KH'ₖ, KH"ₖ et KH'''ₖ.

La figure 3 représente un autre procédé de fonctionnement du système 2. Il est décrit dans le cas particulier du foyer 40. Dans ce procédé, les cryptogrammes KH'ₖ^{Kisoft}, KH"ₖ^{Kichip}, KH'''ₖ^{Kichip} ne sont pas directement transmis de la tête de réseau 6 vers tous les lecteurs mais sont transmis aux lecteurs par l'intermédiaire des enregistreurs.

Le procédé débute par une phase 300 d'initialisation. La phase 300 est par exemple identique à la phase 150 à l'exception du fait que l'étape 156 est remplacée par une étape 302. Lors de l'étape 302, les cryptogrammes KH'ₖ^{Kisoft}, KH"ₖ^{Kichip}, KH"'ₖ^{Kichip} générés pour les différents lecteurs du foyer 40 sont uniquement transmis aux enregistreurs et non pas directement aux lecteurs. Les enregistreurs mémorisent ces cryptogrammes associés à l'identifiant STB-ID du lecteur correspondant. De préférence, les cryptogrammes KH'ₖ^{Kisoft}, KH"ₖ^{Kichip}, KH'''ₖ^{Kichip} pour l'agent d'accès conditionnel et les cryptogrammes KH'ₖ^{Kisc} et KH"ₖ^{Kisc} pour la carte à puce sont transmis dans un même message EMM.

La transmission des contenus multimédias ainsi que les phases d'enregistrement sont identiques à celles précédemment décrites.

Ensuite, le lecteur 54 procède à une phase 310 de lecture d'un contenu multimédia enregistré avec une protection logicielle. Cette phase 310 est par exemple identique à la phase 230 sauf que les étapes 236 et 238 sont remplacées par des étapes 312 et 314.

Lors de l'étape 312, la demande de licence inclut également l'identifiant STB-ID du lecteur 50.

Lors de l'étape 314, si le partage de contenu multimédia enregistré est autorisé, l'enregistreur personnalise la licence transmise au lecteur en fonction de l'identifiant STB-ID reçu dans la demande. Plus précisément, l'enregistreur intègre dans la licence le cryptogramme KH'ₖ^{Kisoft} associé à l'identifiant STB-ID du lecteur. Cette licence personnalisée est alors transmise au lecteur.

Lors de l'étape 242, le lecteur récupère donc le cryptogramme KH'ₖ^{Kisoft} directement dans la licence reçue et non pas dans un message EMM.

Le reste des étapes est identique à celles décrites en regard de la phase 230. Ainsi, dans ce mode de réalisation, le cryptogramme KH'ₖ^{Kisoft} n'est transmis au lecteur qu'au moment de la demande de lecture et non pas systématiquement lors d'une phase d'initialisation.

Il est également possible de procéder à des phases 320 et 322 de lecture d'un contenu multimédia enregistré, respectivement, avec une protection matérielle et avec une protection par réembrouillage local. Ces phases 320 et 322 sont respectivement identiques aux phases 260 et 280 précédemment décrites sauf que le cryptogramme KH"ₖ^{Kichip} ou le cryptogramme KH"'ₖ^{Kichip} est contenu dans la licence transmise par l'enregistreur et non pas reçu au préalable lors de la phase d'initialisation. Ce mode de réalisation évite une désynchronisation entre l'indice des clés utilisées par l'enregistreur et l'indice des clés utilisées par le lecteur. Par exemple, une telle désynchronisation peut apparaître si le lecteur était éteint au moment où les cryptogrammes KH^{ki} lui ont été transmis, c'est-à-dire pendant la phase d'initialisation.

De nombreux autres modes de réalisation sont possibles. Par exemple, les contenus multimédias sont échangés entre l'enregistreur et un lecteur soit par lecture de flux soit par téléchargement.

Le contenu multimédia enregistré peut être téléchargé à partir de la mémoire d'un autre terminal que le terminal qui l'a enregistré. Par exemple, le lecteur 54 peut recevoir et enregistrer localement un contenu multimédia enregistré initialement par l'enregistreur 50 et partager ce contenu multimédia enregistré avec le lecteur 56.

En variante, la gestion des indices k de clé peut être omise. Dans une autre variante, un seul mode de protection est possible. Le procédé est donc simplifié en conséquence.

Dans une autre variante, l'autorisation ou non d'enregistrer un contenu multimédia se déduit des titres d'accès des terminaux. Par exemple, ces titres d'accès sont comparés à des droits d'accès contenus dans les messages ECM reçus pour en déduire l'autorisation et, en alternance, l'interdiction d'enregistrer le contenu multimédia.

Le mot de contrôle CW' peut être généré par le processeur de sécurité et non pas par l'agent d'accès conditionnel. Plusieurs mots de contrôles CW' peuvent être générés pour embrouiller des cryptopériodes respectives du contenu multimédia enregistré.

Il est aussi possible de générer un aléa noté CW'^{kb} puis de déchiffrer cet aléa avec une clé K_{b} pour obtenir le mot de contrôle CW'. Ensuite, le coprocesseur 94 chiffre ce mot de contrôle CW' avec sa clé KH'''ₖ pour obtenir le cryptogramme CW'^{KH"'k} qui est intégré à la licence. La clé K_{b} peut être la clé K_{ichip} du processeur 80 ou une autre clé.

Les clés locales KH d'un foyer peuvent être générées par l'un des enregistreurs de ce foyer puis transmises à la tête de réseau 6 qui crée alors les cryptogrammes KH'ₖ^{Kisoft}, KH"ₖ^{Kichip}, KH'''ₖ^{Kichip} avant de les transmettre au lecteur. En variante, l'enregistreur ne génère pas les clés KH dans leur totalité mais génère une information qui est transmise à la tête de réseau puis la tête de réseau génère les clés KH à partir de cette information.

L'embrouillage des contenus multimédias peut être réalisé différemment. Par exemple, l'embrouillage est réalisé à un autre niveau que le niveau TS comme proposé dans la spécification Ismacryp. Les différentes composantes du contenu multimédia, telles que la vidéo et l'audio, ne sont pas nécessairement embrouillées avec le même mot de contrôle.

Ce qui a été décrit précédemment, s'applique aussi au cas où les terminaux d'un même foyer sont répartis sur plusieurs sites distincts tels que la résidence principale et la résidence secondaire.

L'enregistrement d'un contenu multimédia peut être programmé par l'utilisateur.

Lorsqu'un contenu multimédia est enregistré avec un mode de protection logiciel, il n'est pas nécessaire que le lecteur soit pourvu d'un processeur de sécurité matériel, amovible ou non. C'est par exemple le cas du lecteur 54.

En variante, les terminaux équipés d'un processeur de sécurité matériel pour la mise en oeuvre de la protection par réembrouillage local n'ont pas nécessairement besoin d'être aussi équipé d'une carte à puce. Par exemple, la carte à puce 102 du terminal 52 peut être omise. Dans ce cas, les cryptogrammes CWₜ^{Ks} sont généré par la tête de réseau et directement transmis au processeur 80 du terminal 52.

Lorsque certains paramètres, comme le contenu du champ « Default-P » ou « Life-T », sont nécessairement identiques pour tous les terminaux d'un même foyer, ceux-ci peuvent être directement associés à l'identifiant House-Id dans une table supplémentaire. Dans ce cas, les champs tels que « Default-P » et « Life-T » sont omis de la table 36.

Il n'est pas nécessaire que lorsqu'un terminal à l'autorisation d'enregistrer, il ait également l'autorisation de lire un contenu multimédia enregistré. Ainsi, dans un autre mode de réalisation, en plus du champ « Record-A », la table 36 comprend un champ « Read-A » associé à chaque identifiant STB-ID. Ce champ « Read-A » contient une autorisation et, en alternance, une interdiction de lire un contenu multimédia enregistré. Un terminal peut lire un contenu multimédia uniquement si le contenu du champ « Read-A » associé à son identifiant STB-ID l'y autorise.

## Revendications

1. Procédé de protection d'un contenu multimédia enregistré, dans lequel :
- une tête de réseau transmet (162) un contenu multimédia embrouillé et des messages ECM (Entitlement Control Message) contenant des cryptogrammes CW* de mots de contrôle CW permettant chacun de désembrouiller une cryptopériode respective du contenu multimédia embrouillé,
- un enregistreur reçoit le contenu multimédia embrouillé et les messages ECM, déchiffre (184) les cryptogrammes CW* contenus dans les messages ECM reçus avec une clé d'abonnement Kₐ et protège (186) en lecture le contenu multimédia embrouillé à l'aide d'une clé locale KHₖ en chiffrant, avec la clé locale KHₖ, les mots de contrôle déchiffrés pour générer des cryptogrammes CW^{KHK},
- l'enregistreur enregistre (192) le contenu multimédia embrouillé et les cryptogrammes CW^{KHk},
dans lequel le procédé comporte aussi :
- la fourniture (152, 154) d'une table associant à un identifiant de foyer
• l'enregistreur, et
• un groupe de M lecteurs distincts choisis parmi un ensemble de N lecteurs aptes à déchiffrer, lorsqu'ils ont reçu la clé locale KHₖ, les cryptogrammes CW^{KHk}, puis à désembrouiller le contenu multimédia enregistré avec les mots de contrôle CW ainsi déchiffrés pour lire le contenu multimédia en clair, où M est un entier supérieur ou égal à deux et strictement inférieur à N, et
- une étape lors de laquelle la tête de réseau transmet la clé KHₖ aux lecteurs qui sont associés au même identifiant de foyer dans la table et ne transmet pas la clé KHₖ aux lecteurs qui ne sont pas associés à cet identifiant de foyer dans cette table, **caractérisé en ce que** l'étape lors de laquelle la tête de réseau transmet la clé KHₖ aux lecteurs se déroule en deux sous-étapes :
• une sous-étape lors de laquelle la tête de réseau transmet (302) à l'enregistreur, pour chaque lecteur du groupe de M lecteurs, un cryptogramme KHₖ^{Ki} obtenu en chiffrant la clé locale KHₖ avec une clé Kᵢ connue seulement du i-ème lecteur du groupe de M lecteurs parmi l'ensemble des N lecteurs,
• une sous-étape lors de laquelle, en réponse à une demande de lecture du contenu multimédia par le i-ème lecteur, l'enregistreur transmet (314) à ce lecteur le cryptogramme KHₖ^{Ki}, et le i-ème lecteur déchiffre le cryptogramme KHₖ^{Ki} avec sa clé Kᵢ pour obtenir la clé locale KHₖ permettant de désembrouiller le contenu multimédia enregistré.

2. Procédé de protection d'un contenu multimédia enregistré, dans lequel :
- une tête de réseau transmet (162) un contenu multimédia embrouillé et des messages ECM (Entitlement Control Message) contenant des cryptogrammes CW* de mots de contrôle CW permettant chacun de désembrouiller une cryptopériode respective du contenu multimédia embrouillé,
- un enregistreur reçoit le contenu multimédia embrouillé et les messages ECM, déchiffre (208) les cryptogrammes CW* contenus dans les messages ECM reçus avec une clé d'abonnement Kₐ et protège (186) en lecture le contenu multimédia embrouillé à l'aide d'une clé locale KHₖ en désembrouillant (214) le contenu multimédia avec les mots de contrôle déchiffrés puis en embrouillant (216) à nouveau le contenu multimédia avec au moins un mot de contrôle CW' et en générant (200) un cryptogramme CW'^{KHk} correspondant au mot de contrôle CW' chiffré avec la clé locale KHₖ,
- l'enregistreur enregistre (218) le contenu multimédia embrouillé et le cryptogramme CW'^{KHk},
dans lequel le procédé comporte aussi :
- la fourniture (152, 154) d'une table associant à un identifiant de foyer :
• l'enregistreur, et
• un groupe de M lecteurs distincts choisis parmi un ensemble de N lecteurs aptes à déchiffrer, lorsqu'ils ont reçu la clé locale KHₖ, le cryptogramme CW'^{KHk}, puis à désembrouiller le contenu multimédia enregistré avec le mot de contrôle CW' ainsi déchiffrés pour lire le contenu multimédia en clair, où M est un entier supérieur ou égal à deux et strictement inférieur à N, et
- une étape lors de laquelle la tête de réseau transmet la clé KHₖ aux lecteurs qui sont associés au même identifiant de foyer dans la table et ne transmet pas la clé KHₖ aux lecteurs qui ne sont pas associés à cet identifiant de foyer dans cette table, **caractérisé en ce que** l'étape lors de laquelle la tête de réseau transmet la clé KHₖ aux lecteurs se déroule en deux sous-étapes :
• une sous-étape lors de laquelle la tête de réseau transmet (302) à l'enregistreur, pour chaque lecteur du groupe de M lecteurs, un cryptogramme KHₖ^{Ki} obtenu en chiffrant la clé locale KHₖ avec une clé Kᵢ connue seulement du i-ème lecteur du groupe de M lecteurs parmi l'ensemble des N lecteurs,
• une sous-étape lors de laquelle, en réponse à une demande de lecture du contenu multimédia par le i-ème lecteur, l'enregistreur transmet (314) à ce lecteur le cryptogramme KHₖ^{Ki}, et le i-ème lecteur déchiffre le cryptogramme KHₖ^{Ki} avec sa clé Kᵢ pour obtenir la clé locale KHₖ permettant de désembrouiller le contenu multimédia enregistré.

3. Procédé selon l'une quelconque des revendications précédentes, dans lequel le procédé comprend :
- la fourniture (152, 154) d'une autre clé locale KH"ₖ aux seuls lecteurs d'un sous-groupe de P lecteurs sélectionnés parmi le groupe de M lecteurs, ces P lecteurs étant les seuls du groupe de M lecteurs à mettre en oeuvre un mode de protection plus robuste du contenu multimédia enregistré, où P est un entier supérieur ou égal à un et strictement inférieur à M,
- l'enregistreur sélectionne (186, 202) en alternance, la clé locale KHₖ et la clé locale KH"ₖ en fonction d'un indicateur de mode de protection à utiliser et protège en lecture le contenu multimédia embrouillé uniquement à l'aide de la clé locale sélectionnée.

4. Procédé selon la revendication 3, dans lequel l'enregistreur reçoit un message ECM contenant, en plus des cryptogrammes CW*, l'indicateur du mode de protection à appliquer lors de l'enregistrement du contenu multimédia embrouillé à l'aide des mots de contrôle CW* contenus dans ce message ECM.

5. Procédé selon l'une quelconque des revendications précédentes, dans lequel en réponse à l'ajout ou à la suppression d'un lecteur associé à l'identifiant de foyer, la tête de réseau transmet une nouvelle clé locale KHₖ₊₁ aux lecteurs qui sont associés à cet identifiant de foyer dans la table et ne transmet pas cette nouvelle clé locale KHₖ₊₁ aux lecteurs qui ne sont pas associés à cet identifiant de foyer dans cette table.

6. Procédé selon la revendication 5, dans lequel :
- l'enregistreur associe (190) à chaque contenu multimédia enregistré un indice k de la clé locale utilisée pour protéger ce contenu multimédia enregistré,
- chaque lecteur mémorise la clé locale KHₖ et KHₖ₊₁ associée à leur indice k respectif, et
- le lecteur sélectionne (240) la clé locale parmi les clés KHₖ et KHₖ₊₁, pour enlever la protection du contenu multimédia, en fonction de l'indice k de clé locale associé à ce contenu multimédia enregistré.

7. Procédé de transmission de contenu multimédia pour la mise en oeuvre d'un procédé de protection conforme à l'une quelconque des revendications précédentes, dans lequel une tête de réseau :
- transmet (162) un contenu multimédia embrouillé et des messages ECM (Entitlement Control Message) contenant des cryptogrammes CW* de mots de contrôle CW permettant chacun de désembrouiller une cryptopériode respective du contenu multimédia embrouillé,
- transmet la clé locale KHₖ aux lecteurs qui sont associés au même identifiant de foyer dans la table et ne transmet pas la clé locale KHₖ aux lecteurs qui ne sont pas associés à cet identifiant de foyer dans cette table,
**caractérisé en ce que** l'étape lors de laquelle la tête de réseau transmet la clé KHₖ aux lecteurs comporte une sous-étape lors de laquelle la tête de réseau transmet (302) à l'enregistreur, pour chaque lecteur du groupe de M lecteurs, un cryptogramme KHₖ^{Ki} obtenu en chiffrant la clé locale KHₖ avec une clé Kᵢ connue seulement du i-ème lecteur du groupe de M lecteurs parmi l'ensemble des N lecteurs.

8. Procédé d'enregistrement de contenu multimédia transmis selon un procédé conforme à la revendication 7, dans lequel :
- un enregistreur reçoit le contenu multimédia embrouillé et les messages ECM, déchiffre (184) les cryptogrammes CW* contenus dans les messages ECM reçus avec une clé d'abonnement Kₐ et protège en lecture le contenu multimédia embrouillé à l'aide d'une clé locale KHₖ,
- l'enregistreur enregistre (192, 218) le contenu multimédia embrouillé protégé avec la clé KHₖ,
**caractérisé en ce que** :
- l'enregistreur reçoit (158) de la tête de réseau, pour chaque lecteur du groupe de M lecteurs, un cryptogramme KHₖ^{Ki} obtenu en chiffrant la clé locale KHₖ avec une clé Kᵢ connue seulement du i-ème lecteur du groupe de M lecteurs parmi l'ensemble des N lecteurs, et
- en réponse à une demande de lecture du contenu multimédia par le i-ème lecteur, l'enregistreur transmet (314) à ce lecteur le cryptogramme KHₖ^{Ki}.

9. Procédé selon la revendication 8 dans lequel :
- l'enregistreur tire (200) de façon aléatoire ou pseudo aléatoire au moins un cryptogramme CW'^{Kb}, puis
- un processeur de sécurité de l'enregistreur déchiffre (202) le cryptogramme CW'^{Kb} avec une clé K_{b} pour obtenir le mot de contrôle CW' en clair, puis embrouille (216) à nouveau le contenu multimédia, précédemment désembrouillé, avec le mot de contrôle ainsi obtenu.

10. Procédé selon l'une quelconque des revendications 8 à 9, dans lequel l'enregistreur inhibe systématiquement (176) et, en alternance, autorise l'enregistrement du contenu multimédia embrouillé en fonction d'une autorisation ou d'une interdiction d'enregistrement contenue dans les messages ECM contenant les mots de contrôle CW* nécessaires pour désembrouiller ce contenu multimédia.

11. Enregistreur et/ou lecteur pour la mise en oeuvre d'un procédé conforme à l'une quelconque des revendications précédentes, **caractérisé en ce que** cet enregistreur et/ou lecteur comporte :
- un calculateur électronique programmable, et
- un support d'enregistrement d'informations contenant des instructions pour la mise en oeuvre d'un procédé conforme à l'une quelconque des revendications précédentes lorsque ces instructions sont exécutées par le calculateur électronique.

12. Tête de réseau pour la mise en oeuvre d'un procédé conforme à l'une quelconque des revendications 1 à 7, cette tête de réseau comprenant un système (28) d'accès conditionnel, **caractérisé en ce que** le système (28) d'accès conditionnel comporte:
- un calculateur électronique programmable, et
- un support d'enregistrement d'informations contenant des instructions pour la mise en oeuvre d'un procédé conforme à l'une quelconque des revendications 1 à 7 lorsque ces instructions sont exécutées par le calculateur électronique, et
- la table (36) associant à un identifiant de foyer
• l'enregistreur, et
• un groupe de M lecteurs distincts choisis parmi un ensemble de N lecteurs aptes à déchiffrer, lorsqu'ils ont reçu la clé locale KHₖ, les cryptogrammes CW^{KHk} ou le cryptogramme CW'^{KHk} puis à désembrouiller le contenu multimédia enregistré avec les mots de contrôle CW ou le mot de contrôle CW' ainsi déchiffrés pour lire le contenu multimédia en clair, où M est un entier supérieur ou égal à deux et strictement inférieur à N.

13. Support d'enregistrement d'informations, **caractérisé en ce qu'**il comporte des instructions pour la mise en oeuvre d'un procédé conforme à l'une quelconque des revendications 1 à 10, lorsque ces instructions sont exécutées par un calculateur électronique.

## Patentansprüche

1. Verfahren zum Schutz eines gespeicherten Multimedia-Inhalts, wobei:
- ein Netzwerkkopf einen verschlüsselten Multimedia-Inhalt und ECM-Nachrichten (Entitlement Control Message) überträgt (162), die Kryptogramme CW* von Steuerwörtern CW enthalten, die es jeweils ermöglichen, eine entsprechende Kryptoperiode des verschlüsselten Multimedia-Inhalts zu entschlüsseln,
- ein Aufzeichnungsgerät den verschlüsselten Multimedia-Inhalt und die ECM-Nachrichten empfängt, die in den empfangenen ECM-Nachrichten enthaltenen Kryptogramme CW* mit einem Abonnementschlüssel Kₐ entschlüsselt (184) und den verschlüsselten Multimedia-Inhalt mit einem lokalen Schlüssel KHₖ gegen eine Wiedergabe schützt (186), indem es mit dem lokalen Schlüssel KHₖ die entschlüsselten Steuerwörter zur Erzeugung von Kryptogrammen CW^{KHk} verschlüsselt,
- das Aufzeichnungsgerät den verschlüsselten Multimedia-Inhalt und die Kryptogramme CW^{KHk} aufzeichnet (192),
wobei das Verfahren weiterhin umfasst:
- das Bereitstellen (152, 154) einer Tabelle, die Folgendes mit einer Haushaltskennung verknüpft:
• das Aufzeichnungsgerät, und
• eine Gruppe von M separaten Wiedergabegeräten, ausgewählt aus einer Gruppe von N Wiedergabegeräten, die in der Lage sind, nach Erhalt des lokalen Schlüssels KHₖ die Kryptogramme CW^{KHk} zu entschlüsseln und dann den gespeicherten Multimedia-Inhalt mit den so entschlüsselten Steuerwörtern CW zu entschlüsseln, um den Multimedia-Inhalt im Klartext wiederzugeben, wobei M eine ganze Zahl größer oder gleich zwei und strikt kleiner als N ist, und
- einen Schritt, in dem der Netzwerkkopf den Schlüssel KHₖ an Wiedergabegeräte überträgt, die derselben Haushaltskennung in der Tabelle zugeordnet sind, und den Schlüssel KHₖ nicht an Wiedergabegeräte überträgt, die nicht dieser Haushaltskennung in dieser Tabelle zugeordnet sind,
**dadurch gekennzeichnet, dass** der Schritt, in dem der Netzwerkkopf den Schlüssel KHk an die Wiedergabegeräte überträgt, in zwei Teilschritten durchgeführt wird:
• ein Teilschritt, in dem der Netzwerkkopf für jedes Wiedergabegerät in der Gruppe der M Wiedergabegeräte ein Kryptogramm KHₖ^{Ki} an das Aufzeichnungsgerät überträgt (302), das durch Verschlüsseln des lokalen Schlüssels KHₖ mit einem Schlüssel Kᵢ erhalten wird, der nur dem i-ten Wiedergabegerät in der Gruppe der M Wiedergabegeräte unter allen N Wiedergabegeräten bekannt ist,
• ein Teilschritt, in dem das Aufzeichnungsgerät als Reaktion auf eine Anforderung zur Wiedergabe des Multimedia-Inhalts durch das i-te Wiedergabegerät das Kryptogramm KHₖ^{Ki} an dieses Wiedergabegerät überträgt (314), und das i-te Wiedergabegerät das Kryptogramm KHₖ^{Ki} mit seinem Schlüssel Kᵢ entschlüsselt, um den lokalen Schlüssel KHₖ zur Entschlüsselung des gespeicherten Multimedia-Inhalts zu erhalten.

2. Verfahren zum Schutz eines gespeicherten Multimedia-Inhalts, wobei:
- ein Netzwerkkopf einen verschlüsselten Multimedia-Inhalt und ECM-Nachrichten (Entitlement Control Message) überträgt (162), die Kryptogramme CW* von Steuerwörtern CW enthalten, die es jeweils ermöglichen, eine entsprechende Kryptoperiode des verschlüsselten Multimedia-Inhalts zu entschlüsseln,
- ein Aufzeichnungsgerät den verschlüsselten Multimedia-Inhalt und die ECM-Nachrichten empfängt, die in den empfangenen ECM-Nachrichten enthaltenen Kryptogramme CW* mit einem Abonnementschlüssel Kₐ entschlüsselt (208) und den verschlüsselten Multimedia-Inhalt mit einem lokalen Schlüssel KHₖ gegen eine Wiedergabe schützt (186), indem es den Multimedia-Inhalt mit den entschlüsselten Steuerwörtern entschlüsselt (214) und dann den Multimedia-Inhalt erneut mit mindestens einem Steuerwort CW' verschlüsselt (216) und ein Kryptogramm CW'^{KHk} erzeugt (200), das dem Steuerwort CW' entspricht, das mit dem lokalen Schlüssel KHₖ verschlüsselt ist,
- das Aufzeichnungsgerät den verschlüsselten Multimedia-Inhalt und das Kryptogramm CW'^{KHk} speichert (218),
wobei das Verfahren weiterhin umfasst:
- das Bereitstellen (152, 154) einer Tabelle, die Folgendes mit einer Haushaltskennung verknüpft:
• das Aufzeichnungsgerät, und
• eine Gruppe von M separaten Wiedergabegeräten, ausgewählt aus einer Gruppe von N Wiedergabegeräten, die in der Lage sind, nach Erhalt des lokalen Schlüssels KHₖ das Kryptogramm CW'^{KHk} zu entschlüsseln und dann den gespeicherten Multimedia-Inhalt mit dem so entschlüsselten Steuerwort CW' zu entschlüsseln, um den Multimedia-Inhalt im Klartext wiederzugeben, wobei M eine ganze Zahl größer oder gleich zwei und strikt kleiner als N ist, und
- einen Schritt, in dem der Netzwerkkopf den Schlüssel KHk an Wiedergabegeräte überträgt, die derselben Haushaltskennung in der Tabelle zugeordnet sind, und den Schlüssel KHₖ nicht an Wiedergabegeräte überträgt, die nicht dieser Haushaltskennung in dieser Tabelle zugeordnet sind,
**dadurch gekennzeichnet, dass** der Schritt, in dem der Netzwerkkopf den Schlüssel KHk an die Wiedergabegeräte überträgt, in zwei Teilschritten durchgeführt wird:
• ein Teilschritt, in dem der Netzwerkkopf für jedes Wiedergabegerät in der Gruppe der M Wiedergabegeräte ein Kryptogramm KHₖ^{Ki} an das Aufzeichnungsgerät überträgt (302), das durch Verschlüsseln des lokalen Schlüssels KHₖ mit einem Schlüssel Kᵢ erhalten wird, der nur dem i-ten Wiedergabegerät in der Gruppe der M Wiedergabegeräte unter allen N Wiedergabegeräten bekannt ist,
• ein Teilschritt, in dem das Aufzeichnungsgerät als Reaktion auf eine Anforderung zur Wiedergabe des Multimedia-Inhalts durch das i-te Wiedergabegerät das Kryptogramm KHₖ^{Ki} an dieses Wiedergabegerät überträgt (314), und das i-te Wiedergabegerät das Kryptogramm KHₖ^{Ki} mit seinem Schlüssel Kᵢ entschlüsselt, um den lokalen Schlüssel KHₖ zur Entschlüsselung des gespeicherten Multimedia-Inhalts zu erhalten.

3. Verfahren nach einem der vorangehenden Ansprüche, wobei das Verfahren umfasst:
- das Bereitstellen (152, 154) eines weiteren lokalen Schlüssels KH"ₖ nur für die Wiedergabegeräte einer Untergruppe von P Wiedergabegeräten, die aus der Gruppe von M Wiedergabegeräten ausgewählt wurden, wobei diese P Wiedergabegeräte die einzigen in der Gruppe von M Wiedergabegeräten sind, die einen stabileren Schutzmodus des gespeicherten Multimedia-Inhalts umsetzten, wobei P eine ganze Zahl ist, die größer oder gleich eins und strikt geringer ist als M,
- das Aufzeichnungsgerät abwechselnd den lokalen Schlüssel KHₖ und den lokalen Schlüssel KH"ₖ gemäß einem Indikator des zu verwendenden Schutzmodus auswählt (186, 202) und den verschlüsselten Multimedia-Inhalt nur mit dem ausgewählten lokalen Schlüssel gegen eine Wiedergabe schützt.

4. Verfahren nach Anspruch 3, wobei das Aufzeichnungsgerät eine ECM-Nachricht empfängt, die zusätzlich zu den Kryptogrammen CW* den Schutzmodusindikator enthält, der beim Speichern des verschlüsselten Multimedia-Inhalts unter Verwendung der in dieser ECM-Nachricht enthaltenen Steuerwörter CW* anzuwenden ist.

5. Verfahren nach einem der vorangehenden Ansprüche, wobei als Reaktion auf das Hinzufügen oder Löschen eines Wiedergabegeräts, das der Haushaltskennung zugeordnet ist, der Netzwerkkopf einen neuen lokalen Schlüssel KHₖ₊₁ an die Wiedergabegeräte überträgt, die dieser Haushaltskennung in der Tabelle zugeordnet sind, und diesen neuen lokalen Schlüssel KHₖ₊₁ nicht an die Wiedergabegeräte überträgt, die nicht mit dieser Haushaltskennung in dieser Tabelle verbunden sind.

6. Verfahren nach Anspruch 5, wobei:
- das Aufzeichnungsgerät jedem gespeicherten Multimedia-Inhalt einen Index k des lokalen Schlüssels zuordnet (190), der zum Schutz dieses gespeicherten Multimedia-Inhalts verwendet wird,
- jedes Wiedergabegerät den lokalen Schlüssel KHₖ und KHₖ₊₁ speichert, der dem jeweiligen Index k zugeordnet ist, und
- das Wiedergabegerät den lokalen Schlüssel aus den Schlüsseln KHₖ und KHₖ₊₁ auswählt (240), um den Schutz für den Multimedia-Inhalt aufzuheben, und zwar in Abhängigkeit vom Index k des lokalen Schlüssels, der dem gespeicherten Multimedia-Inhalt zugeordnet ist.

7. Verfahren zum Übertragen eines Multimedia-Inhalts zur Durchführung eines Schutzverfahrens gemäß einem der vorangehenden Ansprüche, wobei ein Netzwerkkopf:
- einen verschlüsselten Multimedia-Inhalt und ECM-Nachrichten (Entitlement Control Message) überträgt (162), die Kryptogramme CW* von Steuerwörtern CW enthalten, die es jeweils ermöglichen, eine entsprechende Kryptoperiode des verschlüsselten Multimedia-Inhalts zu entschlüsseln,
- den lokalen Schlüssel KHₖ an die Wiedergabegeräte überträgt, die derselben Haushaltskennung in der Tabelle zugeordnet sind, und den Schlüssel KHₖ nicht an die Wiedergabegeräte überträgt, die nicht dieser Haushaltskennung in dieser Tabelle zugeordnet sind,
**dadurch gekennzeichnet, dass** der Schritt, in dem der Netzwerkkopf den Schlüssel KHk an die Wiedergabegeräte überträgt, einen Teilschritt umfasst, in dem der Netzwerkkopf für jedes Wiedergabegerät in der Gruppe der M Wiedergabegeräte ein Kryptogramm KHₖ^{Ki} an das Aufzeichnungsgerät überträgt (302), das durch Verschlüsseln des lokalen Schlüssels KHₖ mit einem Schlüssel Kᵢ erhalten wird, der nur dem i-ten Wiedergabegerät in der Gruppe der M Wiedergabegeräte unter allen N Wiedergabegeräten bekannt ist.

8. Verfahren zum Speichern eines Multimedia-Inhalts, der nach einem Verfahren gemäß Anspruch 7 übertragen wird, wobei:
- ein Aufzeichnungsgerät den verschlüsselten Multimedia-Inhalt und die ECM-Nachrichten empfängt, die in den empfangenen ECM-Nachrichten enthaltenen Kryptogramme CW* mit einem Abonnementschlüssel Kₐ entschlüsselt (184) und den verschlüsselten Multimedia-Inhalt mit einem lokalen Schlüssel KHₖ gegen eine Wiedergabe schützt,
- das Aufzeichnungsgerät den verschlüsselten Multimedia-Inhalt speichert (192, 218), der mit dem Schlüssel KHₖ geschützt ist,
**dadurch gekennzeichnet, dass**:
- das Aufzeichnungsgerät von dem Netzwerkkopf für jedes Wiedergabegerät in der Gruppe der M Wiedergabegeräte ein Kryptogramm KHₖ^{Ki} empfängt (158), das durch Verschlüsseln des lokalen Schlüssels KHₖ mit einem Schlüssel Kᵢ erhalten wird, der nur dem i-ten Wiedergabegerät in der Gruppe der M Wiedergabegeräte unter allen N Wiedergabegeräten bekannt ist,
- als Reaktion auf eine Anforderung zur Wiedergabe des Multimedia-Inhalts durch das i-te Wiedergabegerät das Aufzeichnungsgerät das Kryptogramm KHₖ^{Ki} an dieses Wiedergabegerät überträgt (314).

9. Verfahren nach Anspruch 8, wobei:
- das Aufzeichnungsgerät zufällig oder pseudozufällig mindestens ein Kryptogramm CW'^{Kb} herauszieht (200) und dann
- ein Sicherheitsprozessor des Aufzeichnungsgeräts das Kryptogramm CW'^{Kb} mit einem Schlüssel K_{b} entschlüsselt (202), um das Steuerwort CW' im Klartext zu erhalten, und dann den zuvor entschlüsselten Multimedia-Inhalt mit dem so erhaltenen Steuerwort wieder verschlüsselt (216).

10. Verfahren nach einem der Ansprüche 8 bis 9, wobei das Aufzeichnungsgerät systematisch das Speichern des verschlüsselten Multimedia-Inhalts abwechselnd verhindert (176) und zulässt, und zwar gemäß einer Berechtigung oder einem Verbot für das Speichern, die bzw. das in den ECM-Nachrichten enthalten ist, die die Steuerwörter CW* enthalten, die notwendig sind, um diesen Multimedia-Inhalt zu entschlüsseln.

11. Aufzeichnungsgerät und/oder Wiedergabegerät zur Durchführung eines Verfahrens nach einem der vorangehenden Ansprüche, **dadurch gekennzeichnet, dass** das Aufzeichnungsgerät und/oder das Wiedergabegerät umfasst:
- einen programmierbaren elektronischen Computer und
- einen Informationsspeicherträger, der Anweisungen zur Durchführung eines Verfahrens gemäß einem der vorangehenden Ansprüche enthält, wenn diese Anweisungen vom elektronischen Computer ausgeführt werden.

12. Netzwerkkopf für die Durchführung eines Verfahrens gemäß einem der Ansprüche 1 bis 7, wobei dieser Netzwerkkopf ein bedingtes Zugangssystem (28) umfasst, **dadurch gekennzeichnet, dass** das bedingte Zugangssystem (28) umfasst:
- einen programmierbaren elektronischen Computer und
- einen Informationsspeicherträger, der Anweisungen zur Durchführung eines Verfahrens gemäß einem der Ansprüche 1 bis 7 enthält, wenn diese Anweisungen vom elektronischen Computer ausgeführt werden, und
- die Tabelle (36), die Folgendes mit einer Haushaltskennung verknüpft:
• das Aufzeichnungsgerät, und
• eine Gruppe von M separaten Wiedergabegeräten, ausgewählt aus einer Gruppe von N Wiedergabegeräten, die in der Lage sind, nach Erhalt des lokalen Schlüssels KHₖ die Kryptogramme CW^{KHk} oder das Kryptogramm CW'^{KHk} zu entschlüsseln und dann den gespeicherten Multimedia-Inhalt mit den so entschlüsselten Steuerwörtern CW bzw. Steuerwort CW' zu entschlüsseln, um den Multimedia-Inhalt im Klartext wiederzugeben, wobei M eine ganze Zahl größer oder gleich zwei und strikt kleiner als N ist.

13. Informationsspeicherträger, **dadurch gekennzeichnet, dass** er Anweisungen zur Durchführung eines Verfahrens gemäß einem der Ansprüche 1 bis 10 umfasst, wenn diese Anweisungen von einem elektronischen Computer ausgeführt werden.

## Claims

1. Method for protecting a saved multimedia content, in which:
- a network headend transmits (162) a scrambled multimedia content and ECM (Entitlement Control Message) messages containing cryptograms CW* of control words CW each making it possible to descramble a respective cryptoperiod of the scrambled multimedia content,
- a recorder receives the scrambled multimedia content and the ECM messages, decrypts (184) the cryptograms CW* contained in the ECM messages received with a subscription key Kₐ and read-protects (186) the scrambled multimedia content using a local key KHₖ by encrypting, with the local key KHₖ, the decrypted control words to generate cryptograms CW^{KHk},
- the recorder saves (192) the scrambled multimedia content and the cryptograms CW^{KHk},
in which the method also comprises:
- the provision (152, 154) of a table associating, with a home identifier
• the recorder, and
• a group of M distinct readers chosen from among a set of N readers capable of decrypting, when they have received the local key KHₖ, the cryptograms CW^{KHk}, then of descrambling the saved multimedia content with the control words CW thus decrypted to read the multimedia content in clear, in which M is an integer number greater than or equal to two and strictly less than N, and
- a step in which the network headend transmits the key KHₖ to the readers which are associated with the same home identifier in the table and does not transmit the key KHₖ to the readers which are not associated with this home identifier in this table,
**characterized in that** the step in which the network headend transmits the key KHk to the readers proceeds in two substeps:
• a substep in which the network headend transmits (302) to the recorder, for each reader of the group of M readers, a cryptogram KHₖ^{Ki} obtained by encrypting the local key KHₖ with a key Kᵢ known only to the ith reader of the group of M readers out of the set of the N readers,
• a substep in which, in response to a request to read the multimedia content by the ith reader, the recorder transmits (314) to this reader the cryptogram KHₖ^{Ki}, and the ith reader decrypts the cryptogram KHₖ^{Ki} with its key Kᵢ to obtain the local key KHₖ making it possible to descramble the saved multimedia content.

2. Method for protecting a saved multimedia content, in which:
- a network headend transmits (162) a scrambled multimedia content and ECM (Entitlement Control Message) messages containing cryptograms CW* of control words CW each one making it possible to descramble a respective cryptoperiod of the scrambled multimedia content,
- a recorder receives the scrambled multimedia content and the ECM messages, decrypts (208) the cryptograms CW* contained in the ECM messages received with a subscription key Kₐ and read-protects (186) the scrambled multimedia content using a local key KHₖ by descrambling (214) the multimedia content with the decrypted control words then by rescrambling (216) the multimedia content with at least one control word CW' and by generating (200) a cryptogram CW'^{KHk} corresponding to the control word CW' encrypted with the local key KHₖ,
- the recorder saves (218) the scrambled multimedia content and the cryptogram CW'^{KHk},
in which the method also comprises:
- the provision (152, 154) of a table associating, with a home identifier:
• the recorder, and
• a group of M distinct readers chosen from among a set of N readers capable of decrypting, when they have received the local key KHₖ, the cryptogram CW'^{KHk}, then of descrambling the saved multimedia content saved with the control word CW' thus decrypted to read the multimedia content in clear, in which M is an integer number greater than or equal to two and strictly less than N, and
- a step in which the network headend transmits the key KHₖ to the readers which are associated with the same home identifier in the table and does not transmit the key KHₖ to the readers which are not associated with this home identifier in this table,
**characterized in that** the step in which the network headend transmits the key KHₖ to the readers proceeds in two substeps:
• a substep in which the network headend transmits (302) to the recorder, for each reader of the group of M readers, a cryptogram KHₖ^{Ki} obtained by encrypting the local key KHₖ with a key Kᵢ known only to the ith reader of the group of M readers out of the set of the N readers,
• a substep in which, in response to a request to read the multimedia content by the ith reader, the recorder transmits (314) to this reader the cryptogram KHₖ^{Ki}, and the ith reader decrypts the cryptogram KHₖ^{Ki} with its key Kᵢ to obtain the local key KHₖ making it possible to descramble the saved multimedia content.

3. Method according to either one of the preceding claims, in which the method comprises:
- the provision (152, 154) of another local key KH"ₖ to only the readers of a subgroup of P readers selected from among the group of M readers, these P readers being the only ones of the group of M readers to implement a more robust mode of protection of the saved multimedia content, in which P is an integer number greater than or equal to one and strictly less than M,
- the recorder alternately selects (182, 202) the local key KHₖ and the local key KH"k as a function of an indicator of protection mode to be used and read-protects the scrambled multimedia content only using the selected local key.

4. Method according to Claim 3, in which the recorder receives an ECM message containing, in addition to the cryptograms CW*, the indicator of the protection mode to be applied in the saving of the scrambled multimedia content using the control words CW* contained in this ECM message.

5. Method according to any one of the preceding claims, in which, in response to the addition or the deletion of a reader associated with the home identifier, the network headend transmits a new local key KHₖ₊₁ to the readers which are associated with this home identifier in the table and does not transmit this new local key KHₖ₊₁ to the readers which are not associated with this home identifier in this table.

6. Method according to Claim 5, in which:
- the recorder associates (190), with each saved multimedia content, an index k of the local key used to protect this saved multimedia content,
- each reader stores the local key KHₖ and KHₖ₊₁ associated with their respective index k, and
- the reader selects (240) the local key out of the keys KHₖ and KHₖ₊₁ to remove the protection of the multimedia content, as a function of the index k of the local key associated with this saved multimedia content.

7. Method for transmitting multimedia content for the implementation of a protection method according to any one of the preceding claims, in which a network headend:
- transmits (162) a scrambled multimedia content and ECM (Entitlement Control Message) messages containing cryptograms CW* of control words CW each one making it possible to descramble a respective cryptoperiod of the scrambled multimedia content,
- transmits the local key KHₖ to the readers which are associated with the same home identifier in the table and does not transmit the local key KHₖ to the readers which are not associated with this home identifier in this table, **characterized in that** the step in which the network headend transmits the key KHₖ to the readers comprises a substep in which the network headend transmits (302) to the recorder, for each reader of the group of M readers, a cryptogram KHₖ^{Ki} obtained by encrypting the local key KHₖ with a key Kᵢ known only to the ith reader of the group of M readers out of the set of the N readers.

8. Method for saving multimedia content transmitted according to a method according to Claim 7, in which:
- a recorder receives the scrambled multimedia content and the ECM messages, decrypts (184) the cryptograms CW* contained in the ECM messages received with a subscription key Kₐ and read-protects the scrambled multimedia content using a local key KHₖ,
- the recorder saves (192, 218) the scrambled multimedia content protected with the key KHₖ,
**characterized in that**:
- the recorder receives (158) from the network headend, for each reader of the group of M readers, a cryptogram KHₖ^{Ki} obtained by encrypting the local key KHₖ with a key Kᵢ known only to the ith reader of the group of M readers out of the set of the N readers, and
- in response to a request to read the multimedia content by the ith reader, the recorder transmits (314) the cryptogram KHₖ^{Ki} to this reader.

9. Method according to Claim 8, in which:
- the recorder randomly or pseudo-randomly draws (200) at least one cryptogram CW'^{Kb}, then
- a security processor of the recorder decrypts (202) the cryptogram CW'^{Kb} with a key K_{b} to obtain the control word CW' in clear, then rescrambles (216) the multimedia content, previously descrambled, with the control word thus obtained.

10. Method according to either one of Claims 8 and 9, in which the recorder systematically inhibits (176) and, alternately, authorizes saving of the scrambled multimedia content as a function of an authorization or a prohibition to save contained in the ECM messages containing the control words CW* necessary to descramble this multimedia content.

11. Recorder and/or reader for the implementation of a method according to any one of the preceding claims, **characterized in that** this recorder and/or reader comprises:
- a programmable electronic computer, and
- an information storage medium containing instructions for the implementation of a method according to any one of the preceding claims when these instructions are executed by the electronic computer.

12. Network headend for the implementation of a method according to any one of Claims 1 to 7, this network headend comprising a conditional access system (28), **characterized in that** the conditional access system (28) comprises:
- a programmable electronic computer, and
- an information storage medium containing instructions for the implementation of a method according to any one of Claims 1 to 7 when these instructions are executed by the electronic computer, and
- the table (36) associating, with a home identifier
• the recorder, and
• a group of M distinct readers chosen from among a set of N readers capable of decrypting, when they have received the local key KHₖ, the cryptograms CW^{KHk} or the cryptogram CW'^{KHk} then of descrambling the saved multimedia content with the control words CW or the control word CW' thus decrypted to read the multimedia content in clear, in which M is an integer number greater than or equal to two and strictly less than N.

13. Information storage medium, **characterized in that** it comprises instructions for the implementation of a method according to any one of Claims 1 to 10, when these instructions are executed by an electronic computer.
